# EUROPEAN PATENT APPLICATION

(11) **EP 2 288 170 A2**
(43) Date of publication of application: **23.02.2011**
(21) Application number: 10172750.1
(22) Date of filing: 13.08.2010
(51) Int. Cl.: H04N 13/00

(54) **Content transmission method and display device**

(30) Priority: 21.08.2009 JP 2009192400; 12.03.2010 JP 2010056209
(71) Applicant: Sony Corporation, Tokyo 108-0075 (JP)
(72) Inventor: Kitazato, Naohisa, TOKYO (JP)
(74) Representative: Thévenet, Jean-Bruno

(57) **Abstract**

There is provided a video content transmission method that includes the steps of: transmitting normal video content to at least one stream respectively transmitted on at least one broadcast channel transmitting stereoscopic video content that corresponds to the normal video content to at least one stream respectively transmitted on at least one broadcast channel; transmitting, along with the broadcast channel, system information relating to a transmission system of the stereoscopic video content; and transmitting, along with the broadcast channel, source location information relating to a source location of the stereoscopic video content.

## Description

### BACKGROUND OF THE INVENTION

### Field of the Invention

The present invention relates to a content transmission method and a display device.

### Description of the Related Art

It is expected that three-dimensional (3D) broadcast service will become widely available. The 3D broadcast service allows a viewer to enjoy stereoscopic video by displaying three-dimensional images on a screen. In order to achieve the 3D broadcast service, it is considered to be desirable that requirements described below are satisfied.

### SUMMARY OF THE INVENTION

For example, a program of a channel (a 3D channel) that displays three-dimensional images or content (3D content) that displays three-dimensional images is not necessarily created exclusively by signals (3D signals) for displaying three-dimensional images. Of course, in some cases, the whole program may be created exclusively by 3D signals. However, it is considered that three-dimensional images are more likely to be used for a part of the program or a part of the content. In the case of broadcast, if three-dimensional images are constantly displayed on the screen, the viewer becomes tired of viewing them. Further, production costs will be increased if the whole program or content is produced to be 3D compatible. Further, 3D expression is effective for only a limited type of video. Therefore, it is assumed that the 3D broadcast service will be used in a limited way such that only a particular program or only a particular scene is three-dimensionally displayed.

Further, even when three-dimensional images are intended to be displayed by 3D broadcast, it is necessary to ensure that a video signal can be transmitted using a normal broadcast band. Therefore, even when only a part of the program or a part of the content is produced to be 3D compatible, it is desirable that a wider band is not required as compared to a case of displaying normal two-dimensional (2D) images.

Further, it is desirable that the service or content for a 3D part can be used also by a known receiver that is not capable of displaying three-dimensional images. For that reason, even with a receiver capable of displaying three-dimensional images, it is necessary to design the receiver such that the 3D part can be viewed as 2D images.

Moreover, even when a 3D program or 3D content is received by a receiver that is capable of displaying three-dimensional images (a 3D compatible receiver), the user of the 3D compatible receiver may not want to watch video in 3D. Therefore, it is desired that the 3D compatible receiver allows the user to select either 2D video viewing or 3D video viewing and to switch between them. In addition, when 2D video is displayed by the 3D compatible receiver, it is preferable to provide image quality equivalent to that of normal 2D video.

A technology that performs switching between 2D video and 3D video and performs display using a 3D compatible receiver is disclosed in Japanese Patent Application Publication No. JP-A-2005-6114 and Japanese Patent Application Publication No. JP-A-2007-13994, for example.

However, with known technologies including the technology disclosed in Japanese Patent Application Publication No. JP-A-2005-6114 and Japanese Patent Application Publication No. JP-A-2007-13994, it is assumed that switching between 2D video and 3D video is performed using one stream. Therefore, when a 3D incompatible receiver is used, it is necessary to perform conversion from 3D video to 2D video in a section in which 3D video is displayed. However, image quality deteriorates when displaying 2D video in that section. Further, a video data transmission method that is compatible with both the 3D compatible receiver and the 3D incompatible receiver is not taken into consideration in any operation method or any 3D video transmission system.

In light of the foregoing, it is desirable to provide a novel and improved content transmission method and display device that enable display of 2D video and 3D video on a receiving side, regardless of an operation method of 3D video transmission and a 3D video transmission system.

According to an embodiment of the present invention, there is provided a video content transmission method that includes the steps of: transmitting normal video content to at least one stream respectively transmitted on at least one broadcast channel; transmitting stereoscopic video content that corresponds to the normal video content to at least one stream respectively transmitted on at least one broadcast channel; transmitting, along with the broadcast channel, system information relating to a transmission system of the stereoscopic video content; and transmitting, along with the broadcast channel, source location information relating to a source location of the stereoscopic video content.

The number of the at least one broadcast channel may be one, and the number of the at least one stream of the broadcast channel may be one.

The system information transmitted in the system information transmitting step may be described in an event information table (EIT).

The normal video content may form a predetermined program. When the stereoscopic video content is present only in some section of the predetermined program, time information of the stereoscopic video content in the program may be described in the EIT.

The normal video content may form a predetermined program. When the system information that relates to a current program and that is transmitted in the system information transmitting step, and the system information that relates to a next program and that is transmitted in the system information transmitting step may be described in the EIT.

The system information transmitted in the system information transmitting step may be described in an adaptation field of a transport stream (TS).

The system information transmitted in the system information transmitting step may be described in a header area of a video elementary stream (ES).

The number of the at least one broadcast channel may be one, and the number of the at least one stream of the broadcast channel may be at least two.

The system information transmitted in the system information transmitting step may be described in an event information table (EIT).

The normal video content may form a predetermined program. When the stereoscopic video content is present only in some section of the predetermined program, time information of the stereoscopic video content in the program may be described in the EIT.

The normal video content may form a predetermined program. The system information that relates to a current program and that is transmitted in the system information transmitting step, and the system information that relates to a next program and that is transmitted in the system information transmitting step may be described in the EIT.

The system information transmitted in the system information transmitting step may be described in an adaptation field of a transport stream (TS).

The system information transmitted in the system information transmitting step may be described in a header area of a video elementary stream (ES).

The number of the at least one broadcast channel may be at least two, and the number of the at least one stream of each of the broadcast channels may be at least two. The normal video content may be transmitted using a first stream of a first broadcast channel in the normal video transmitting step. The stereoscopic video content may be transmitted using a first stream of a second broadcast channel in the stereoscopic video transmitting step. The system information may be transmitted along with the first broadcast channel in the system information transmitting step. The source location information may be transmitted along with the first broadcast channel in the source location information transmitting step.

The video content transmission method may further include the step of transmitting, when the stereoscopic video content is transmitted in the stereoscopic video transmitting step, return destination information to the first stream through which normal video content corresponding to the stereoscopic video content is transmitted.

The system information transmitted in the system information transmitting step may be described in an event information table (EIT) of the first broadcast channel.

The normal video content may form a predetermined program. When the stereoscopic video content is present only in some section of the predetermined program, time information of the stereoscopic video content in the program may be described in the EIT.

The normal video content may form a predetermined program. The system information that relates to a current program and that is transmitted in the system information transmitting step, and the system information that relates to a next program and that is transmitted in the system information transmitting step may be described in the EIT.

The system information transmitted in the system information transmitting step may be described in an adaptation field of a transport stream (TS).

The system information transmitted in the system information transmitting step may be described in a header area of a video elementary stream (ES).

The video content transmission method may further include the step of transmitting transmission mode identification information in which information that identifies a transmission mode of the stereoscopic video content is described.

According to another embodiment of the present invention, there is provided a video content transmission method that includes the steps of: transmitting normal video content to at least one stream respectively transmitted on at least one broadcast channel; transmitting stereoscopic video content that corresponds to the normal video content, by streaming from a server; transmitting, along with the broadcast channel, system information relating to a transmission system of the stereoscopic video content; and transmitting, along with the broadcast channel, source location information relating to a source location of the stereoscopic video content.

The system information transmitted in the system information transmitting step may be described in an event information table (EIT).

The normal video content may form a predetermined program. When the stereoscopic video content is present only in some section of the predetermined program, time information of the stereoscopic video content in the program may be described in the EIT.

The normal video content may form a predetermined program. The system information that relates to a current program and that is transmitted in the system information transmitting step, and the system information that relates to a next program and that is transmitted in the system information transmitting step may be described in the EIT.

The system information transmitted in the system information transmitting step may be described in an adaptation field of a transport stream (TS).

The system information transmitted in the system information transmitting step may be described in a header area of a video elementary stream (ES).

The video content transmission method may further include the step of transmitting transmission mode identification information in which information that identifies a transmission mode of the stereoscopic video content is described.

According to another embodiment of the present invention, there is provided a video content transmission method that includes the steps of: transmitting normal video content to at least one stream respectively transmitted on at least one broadcast channel; transmitting, in advance from a server, stereoscopic video content that corresponds to the normal video content, before a period in which the stereoscopic video content is displayed; transmitting, along with the broadcast channel, system information relating to a transmission system of the stereoscopic video content; and transmitting, along with the broadcast channel, source location information relating to a source location of the stereoscopic video content.

The system information transmitted in the system information transmitting step maybe described in an event information table (EIT).

The normal video content may form a predetermined program. When the stereoscopic video content is present only in some section of the predetermined program, time information of the stereoscopic video content in the program may be described in the EIT.

The normal video content may form a predetermined program. The system information that relates to a current program and that is transmitted in the system information transmitting step, and the system information that relates to a next program and that is transmitted in the system information transmitting step may be described in the EIT.

The system information transmitted in the system information transmitting step may be described in an adaptation field of a transport stream (TS).

The system information transmitted in the system information transmitting step may be described in a header area of a video elementary stream (ES).

The video content transmission method may further include the step of transmitting transmission mode identification information in which information that identifies a transmission mode of the stereoscopic video content is described.

According to another embodiment of the present invention, there is provided a display device that includes: a display portion that displays one of normal video content and stereoscopic video content; a receiving portion which receives at least one stream in at least one broadcast channel that includes one of the normal video content and the stereoscopic video content, and which receives system information relating to a transmission system of the stereoscopic video content and source location information relating to a source location of the stereoscopic video content, the system information and the source location information being transmitted along with the broadcast channel; and a mode switching portion that performs switching between a first mode in which the normal video content is displayed and a second mode in which the stereoscopic video content is displayed. When the first mode is selected by the mode switching portion, the display portion receives a stream through which the normal video content is transmitted and displays the normal video content. When the second mode is selected by the mode switching portion, based on the transmission system information and the source location information received by the receiving portion, the display portion receives a stream through which the stereoscopic video content is transmitted and displays the stereoscopic video content.

The receiving portion may receive return destination information to the stream through which the normal video content is transmitted from the stream through which the stereoscopic video content is transmitted, the return destination information being transmitted along with the broadcast channel. When the mode switching portion performs switching from the second mode to the first mode, based on the return destination information, the stream through which the normal video content is transmitted may be received and the normal video content may be displayed.

The receiving portion may receive return destination information to the stream through which the normal video content is transmitted from the stream through which the stereoscopic video content is transmitted, the return destination information being transmitted along with the broadcast channel. When the stream through which the stereoscopic video content is transmitted ends, based on the return destination information, the stream through which the normal video content is transmitted may be received and the normal video content may be displayed.

When the mode switching portion selects the second mode and when the receiving portion is not capable of receiving the stream through which the stereoscopic video content is transmitted, the receiving portion may receive the stream through which the normal video content is transmitted, and the display portion may display the normal video content received by the receiving portion. When the stream through which the stereoscopic video content is transmitted appears, the receiving portion may receive, based on the system information, the stream through which the stereoscopic video content is transmitted, and the display portion may display the stereoscopic video content received by the receiving portion.

The display device may further include a storage portion that, when the stream through which the stereoscopic video content is transmitted appears, stores source location information of the stream through which the normal video content is transmitted.

The receiving portion may receive return destination information to the stream through which the normal video content is transmitted from the stream through which the stereoscopic video content is transmitted, the return destination information being transmitted along with the broadcast channel. When the stereoscopic video content ends, if the source location information stored in the storage portion coincides with the return destination information, the mode switching portion may select the first mode, and the display portion may receive, based on the return destination information, the stream through which the normal video content is transmitted and may display the normal video content.

The normal video content and the stereoscopic video content may be transmitted through the same stream in the same broadcast channel.

The normal video content and the stereoscopic video content may be transmitted through different streams in the same broadcast channel.

The normal video content and the stereoscopic video content may be respectively transmitted through different streams in different broadcast channels.

The receiving portion may receive transmission mode identification information in which information that identifies a transmission mode of the stereoscopic video content is described, and may switch a reception process of the stereoscopic video content in accordance with the transmission mode identification information.

According to another embodiment of the present invention, there is provided a display device that includes: a display portion that displays one of normal video content and stereoscopic video content; a receiving portion that receives a stream in a broadcast channel that includes normal video content, and receives system information relating to a transmission system of the stereoscopic video content and source location information relating to a source location of the stereoscopic video content, the system information and the source location information being transmitted along with the broadcast channel; a stream receiving portion that receives stereoscopic video content by streaming; and a mode switching portion that performs switching between a first mode in which the normal video content is displayed and a second mode in which the stereoscopic video content is displayed. When the first mode is selected by the mode switching portion, the display portion receives a stream through which the normal video content is transmitted and displays the normal video content. When the second mode is selected by the mode switching portion, the display portion displays the stereoscopic video content that is received by the stream receiving portion by streaming, based on the transmission system information and the source location information received by the receiving portion.

According to another embodiment of the present invention, there is provided a display device that includes: a display portion that displays one of normal video content and stereoscopic video content; a receiving portion that receives a stream in a broadcast channel that includes normal video content, and receives system information relating to a transmission system of the stereoscopic video content and source location information relating to a source location of the stereoscopic video content, the system information and the source location information being transmitted along with the broadcast channel; a content receiving portion that downloads stereoscopic video content from a server; and a mode switching portion that performs switching between a first mode in which the normal video content is displayed and a second mode in which the stereoscopic video content is displayed. When the first mode is selected by the mode switching portion, the display portion receives a stream through which the normal video content is transmitted and displays the normal video content. When the second mode is selected by the mode switching portion, the display portion displays, based on the transmission system information and the source location information received by the receiving portion, the stereoscopic video content that is downloaded in advance.

According to the embodiments of the present invention described above, it is possible to provide a novel and improved content transmission method and display device that enable display of 2D video and 3D video on a receiving side, regardless of an operation method of 3D video transmission and a 3D video transmission system.

### BRIEF DESCRIPTION OF THE DRAWINGS

FIG. 1 is an explanatory diagram showing a concept of an operation mode in which 3D video is transmitted by appropriately switching between 2D video and 3D video on one stream;
FIG. 2 is an explanatory diagram showing a concept of an operation mode in which an AVC-based (or an MPEG2-based) 3D stream is transmitted over an additional band;
FIG. 3 is an explanatory diagram showing a concept of an operation mode in which a 3D stream is transmitted using multiview video coding (MVC);
FIG. 4 is a flowchart showing an assumed operation on a user side when a 3D program or 3D content is transmitted;
FIG. 5 is an explanatory diagram showing variations of a transmission media mode in a 3D video section;
FIG. 6 is an explanatory diagram showing an example of a 3D segment descriptor for EITpf;
FIG. 7 is an explanatory diagram showing an operation example;
FIG. 8 is an explanatory diagram showing an operation example;
FIG. 9 is an explanatory diagram showing an operation example;
FIG. 10 is an explanatory diagram showing a description example of information relating to display switching between 2D video and 3D video;
FIG. 11 is an explanatory diagram showing an operation example;
FIG. 12 is an explanatory diagram showing an operation example;
FIG. 13 is an explanatory diagram showing an operation example;
FIG. 14 is an explanatory diagram showing an operation example;
FIG. 15 is an explanatory diagram showing an operation example;
FIG. 16 is an explanatory diagram showing an operation example;
FIG. 17 is a flowchart showing a display switching process between 2D video and 3D video;
FIG. 18 is an explanatory diagram showing an example of a configuration of a server;
FIG. 19 is an explanatory diagram showing an example of a configuration of a terminal;
FIG. 20 is an explanatory diagram showing an overview of 2D/3D switching when link information is used;
FIG. 21 is an explanatory diagram showing a case in which 2D video and 3D video are simultaneously broadcasted in one program;
FIG. 22 is an explanatory diagram showing a case in which 2D video and 3D video are simultaneously broadcast in one program;
FIG. 23 is an explanatory diagram showing a case in which 2D video and 3D video are simultaneously broadcast in one program;
FIG. 24 is an explanatory diagram showing a case in which 2D video and 3D video are simultaneously broadcast in one program;
FIG. 25 is a flowchart showing an example of channel selection and playback operation on a terminal on a receiving side;
FIG. 26 is a flowchart showing an example of a recording reservation operation on the terminal on the receiving side; and
FIG. 27 is an explanatory diagram showing an example of a 3D segment descriptor for EITpf.

### DETAILED DESCRIPTION OF THE EMBODIMENT(S)

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

Note that a description will be made in the following order.
1. Assumed video transmission systems
   1-1. Type 1 (2D/3D switching)
   1-2. Type 2 (Addition of 3D stream based on AVC)
   1-3. Type 3 (MVC base)
   1-4. Conclusion
2. Assumed user operation
3. Transmission media mode in 3D video section
4. Information necessary for2D/3D switching
   4-1. Preconditions
   4-2. Necessary information
5. Method of transmitting 2D/3D switching information
   5-1. Method 1
   5-2. Method 2
   5-3 Method 3
6. 2D/3D switching process within program
7. 3D switching of separate broadcasting TS using 3D stream location information
8. Configuration of server
9. Configuration of terminal
10. Conclusion

### 1. Assumed video transmission systems

First, before describing an exemplary embodiment of the present invention in detail, 3D video transmission modes will be described that are assumed to be used when 3D content is transmitted from a broadcast station or a content provider. Then, the exemplary embodiment of the present invention that covers the assumed 3D video transmission modes will be described.

### 1-1. Type 1 (2D/3D switching)

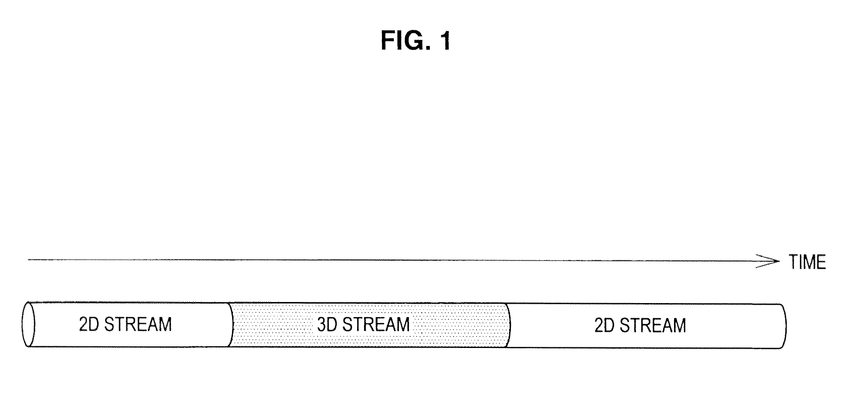

First, as type 1, an operation mode will be described in which 3D video is transmitted by appropriately switching between 2D video and 3D video on one stream. FIG. 1 is an explanatory diagram showing a concept of an operation mode in which 3D video is transmitted by appropriately switching between 2D video and 3D video on one stream.

The type 1 operation mode is an operation mode in which a stream (a 2D stream) for transmitting 2D video is partially switched to a stream (a 3D stream) for transmitting 3D video. The 3D stream is based on MPEG-4 advanced video coding (hereinafter also simply referred to as AVC) or based on MPEG2. This operation mode is a mode in which costs of a provider that transmits video can be reduced most effectively, because a band of a channel for transmitting 2D video can be used constantly.

Therefore, in the type 1 operation mode, 2D video and 3D video are switched as appropriate on the same channel. If a user wears glasses for watching stereoscopic video during 3D video viewing, the user can enjoy the 3D video.

Note that, in the type 1 operation mode, if a stream such as that shown in FIG. 1 is received by a 3D incompatible receiver, a 3D stream part cannot be viewed appropriately. Even when a 3D compatible receiver is used, if the user wants to display the 3D stream part as 2D video, the 3D stream part can be displayed as 2D video by the 3D compatible receiver converting the 3D video to the 2D video. However, generally, 3D to 2D video conversion is performed by extracting one of an image for the right eye and an image for the left eye, resulting in lower resolution as compared to normal 2D video.

### 1-2. Type 2 (Addition of 3D stream based on AVC)

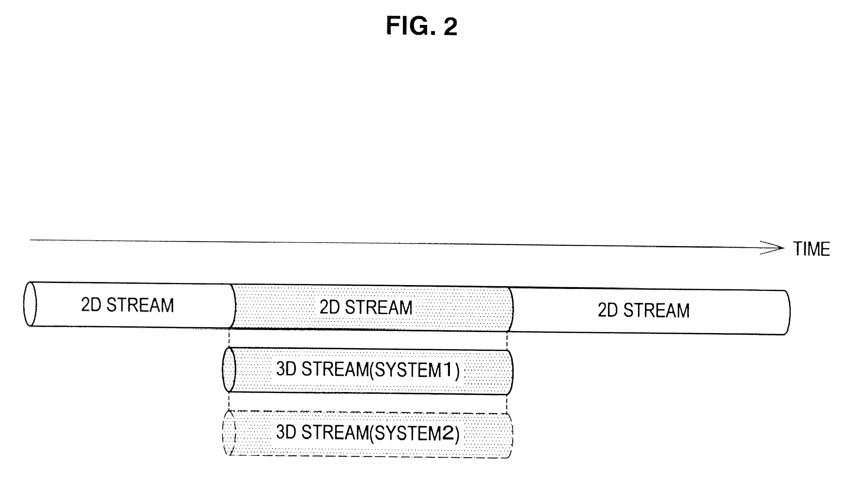

Next, as type 2, an operation mode will be described in which an AVC based (or an MPEG2 based) 3D stream is transmitted over an additional band only during a period for providing 3D video, on a 2D stream channel. From an operation point of view, it may be difficult to prepare an additional band, even if temporarily. However, the preparation of the additional band may be easily achieved, if another elementary stream (ES) is prepared on one channel, if another channel that is physically available is prepared, if data is downloaded in advance via a network or via a broadcast station, or if streaming transmission is performed via the network. FIG. 2 is an explanatory diagram showing a concept of an operation mode in which an AVC-based (or an MPEG2-based) 3D stream is transmitted over an additional band.

In this operation mode, the 2D stream is used as a base, and the 3D stream is transmitted over a separate band only during a period for providing 3D video (hereinafter also referred to as the 3D video period). As a result, when a 3D incompatible receiver is used, 2D video can be displayed also during the 3D video period without any change. When a 3D compatible receiver is used, it is possible to appropriately switch between 3D video display and normal 2D video display.

In addition, in this operation mode, if a band sufficient to transmit a plurality of 3D streams is ensured, compatibility with a plurality of 3D transmission systems is achieved. Examples of the 3D transmission system include a side by side system, a top and bottom system, and video signals to be transmitted also vary depending on the transmission system. FIG. 2 shows a case in which 3D streams based on a plurality of transmission systems are transmitted during the 3D video period. By transmitting the 3D streams based on the plurality of transmission systems in this manner, this operation mode can be used even when a plurality of transmission systems exist for 3D compatible receivers that display 3D video.

### 1-3. Type 3 (MVC base)

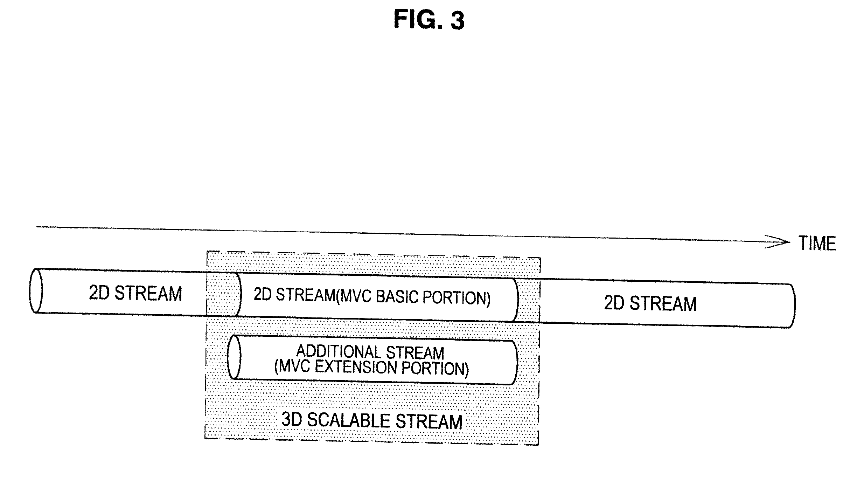

Next, as type 3, an operation mode will be described in which multiview video coding (MVC), which is an extension form of AVC, is used in the 3D video section on the 2D stream channel. An MVC base portion is attached to a 2D stream, and an MVC extension portion is transmitted as another stream. FIG. 3 is an explanatory diagram showing a concept of an operation mode in which a 3D stream is transmitted using MVC.

In the type 3 operation mode as well, similarly to the type 2 case, it is assumed that transmission of the stream of the MVC extension portion is achieved by preparing a separate ES, by preparing another channel that is physically available, by downloading in advance via a network or via a broadcast station, or by performing streaming transmission via the network. Note that, even with a 3D incompatible receiver, it is assumed that the stream of the MVC base portion can be viewed as 2D video.

In the type 3 operation mode, resolution is not impaired in comparison with the type 2 operation mode. Therefore, 3D video display of higher quality is expected with a 3D compatible receiver. On the other hand, in the type 3 operation mode, the 3D compatible receiver is required to decode a plurality of streams simultaneously and in synchronization with each other. Therefore, a high performance device is required to be installed as a television platform.

### 1-4. Conclusion

In this manner, the type 1 to type 3 described above are conceivable as assumed 3D video transmission modes. As a matter of course, there is a high likelihood that a transmission mode of a type other than the above-described types will appear in accordance with improvement in communication infrastructure and improvement in performance of a video receiver. However, in the description below, an embodiment of the present invention will be described on the assumption that the transmission modes of the above-described type 1 to type 3 are used.

### 2. Assumed user operation

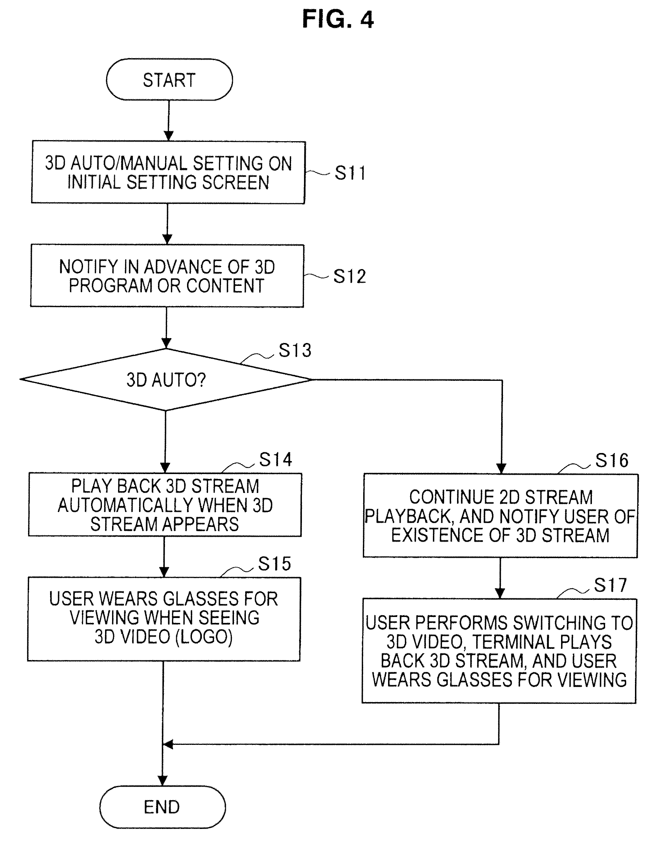

Next, a description will be made of an operation on a user side that is assumed when a 3D program or 3D content is transmitted from a broadcast station, a content distribution service provider or the like. FIG. 4 is a flowchart showing an assumed operation on the user side when a 3D program or 3D content is transmitted.

For example, on an initial setting screen of a 3D compatible receiver, the user sets whether 3D video is automatically displayed on the screen when a 3D period starts, or whether 3D video is displayed on the screen by user operation, using a remote control or the like (step S11). For ease of explanation, a mode in which 3D video is automatically displayed on the screen is referred to as an auto mode, and a mode in which 3D video is displayed on the screen by the user operation is referred to as a manual mode.

The broadcast station or the content distribution service provider gives notification, in advance, of a 3D program that provides 3D video, using an electronic program guide (EPG) or the like (step S12). When the 3D program starts and a 3D stream reaches the receiver (step S13), if the display mode of the receiver is the auto mode, the 3D stream that is received in response to the 3D stream reaching the receiver is automatically played back, and 3D video is displayed on the screen (step S14). The user can enjoy stereoscopic video by wearing glasses and viewing the 3D video displayed on the screen (step S15). Note that, when the 3D video is displayed on the receiver, a mark indicating that 3D video display is in progress may be additionally displayed on a part of the screen.

On the other hand, if the display mode is the manual mode, even when the 3D stream reaches the receiver, 2D stream playback is continued (or 2D video is created from the 3D stream), and the receiver notifies the user of the existence of the 3D stream (step S16). Notification, by the receiver, of the existence of the 3D stream may be performed by displaying on the screen the mark indicating that 3D video display is in progress. When the user switches the display of the receiver from the 2D video display to the 3D video display using a remote control or the like, the receiver plays back the received 3D stream. The user can enjoy stereoscopic video by wearing the glasses and viewing the 3D video displayed on the screen (step S17).

When the 3D program or 3D content is transmitted from the broadcast station or the content distribution service provider, the above-described operation is assumed to be performed on the user side. As a matter of course, there is a high likelihood that an operation other than the above-described operation is performed on the user side. However, in the description below, it is assumed that the display modes of the receiver include the auto mode and the manual mode.

### 3. Transmission media mode in 3D video section

Next, an example of a transmission media mode in a 3D video section will be described. The following variations are conceivable as the transmission media in the 3D video section.
(1) Same ES in broadcast stream
(2) Separate ES in broadcast stream
(3) Separate broadcasting TS
(4) Streaming
(5) Download
Hereinafter, the transmission media mode (transmission mode) in the 3D video section will be described for each variation.

(1) It is considered that 3D stream transmission using the same elementary stream (ES) in a broadcast stream is used in the case of the above-described type 1 operation mode (the operation mode in which switching between 2D video and 3D video is performed on one stream, as appropriate). The transmission of a 3D stream using the same ES can be performed by transmitting the 3D stream in the same manner as in normal 2D video transmission. Therefore, special band management is not necessary. However, as described above, when the 3D stream transmission is performed using the same ES in the broadcast stream, if the 3D stream is received by a 3D incompatible receiver, appropriate viewing is not performed in a 3D stream part. Further, even when a receiver capable of displaying 3D video (a 3D compatible receiver) is used, if the user wants to display the 3D stream part as 2D video, the 3D stream part can be displayed as 2D video by the 3D compatible receiver converting 3D video to 2D video. However, generally, 3D to 2D video conversion is performed by extracting one of an image for the right eye and an image for the left eye, resulting in lower resolution as compared to normal 2D video.

(2) It is considered that 3D stream transmission using a separate elementary stream (ES) in a broadcast stream is used in the case of the above-described type 2 operation mode (the operation mode in which a 3D stream is added based on AVC) or the above-described type 3 operation mode (the operation mode based on MVC). In the 3D stream transmission using the separate ES, even when the 3D stream is received by a 3D incompatible receiver, a 2D stream can be continuously received to display 2D video. Therefore, appropriate viewing is possible even in the 3D stream part. Further, even when a 3D compatible receiver is used, if the user wants to display the 3D stream part as 2D video, 3D to 2D video conversion is not necessary. Thus, resolution is not lowered as compared to normal 2D video. On the other hand, with this transmission method, the width of the band in the 3D video section may be twice the normal width or more in some cases, and management of the broadcast band may become difficult.

(3) It is considered that 3D stream transmission using a separate broadcasting transport stream (TS) is used in the case of the above-described type 2 operation mode (the operation mode in which a 3D stream is added based on AVC) or the above-described type 3 operation mode (the operation mode based on MVC). With this transmission method, another physical channel is selected automatically or by a switching operation by the user, in the 3D video section. When the 3D video section is completed, the channel is automatically returned to the original channel. In the 3D stream transmission using the separate broadcasting TS, similarly to the 3D stream transmission using a separate ES in a broadcast stream, 2D or 3D video can be appropriately displayed regardless of whether the receiver is a 3D incompatible receiver or a 3D compatible receiver. On the other hand, band management is difficult, similarly to the above described method (2). However, since a 3D stream is transmitted using a separate physical channel, there is an advantage that a degree of freedom in operation is increased as compared to the above-described method (2).

(4) It is considered that 3D stream transmission by streaming is used in the case of the above-described type 2 operation mode (the operation mode in which a 3D stream is added based on AVC) or the above-described type 3 operation mode (the operation mode based on MVC). This transmission method is considered to be advantageous in that the management of the broadcast band is not necessary, as compared to the above-described method (2) and method (3). However, with this method, there are issues to be addressed. Examples of the issues to be addressed include: a delay until a session is established between the receiver and a server that transmits a 3D stream; congestion due to simultaneous access from a plurality of receivers in the case of unicast transmission; and time position control.

(5) It is considered that 3D stream transmission by download is used in the case of the above-described type 2 operation mode (the operation mode in which a 3D stream is added based on AVC) or the above-described type 3 operation mode (the operation mode based on MVC). Similarly to the above-described method (4), the management of the broadcast band is not necessary in this transmission method. From this point of view, this transmission method is considered to be advantageous as compared to the above-described method (2) and method (3). Further, a degree of freedom in operation is high because download can be performed via broadcast or communication, and 3D video playback is performed using data downloaded in advance. As a result, this method is also considered to be advantageous in that the issues to be addressed in the above-described method (4) are not present. On the other hand, a storage device for storing the downloaded data is required for the receiver, and a specification is required to ensure that data be downloaded to the receiver before start of the 3D video section.

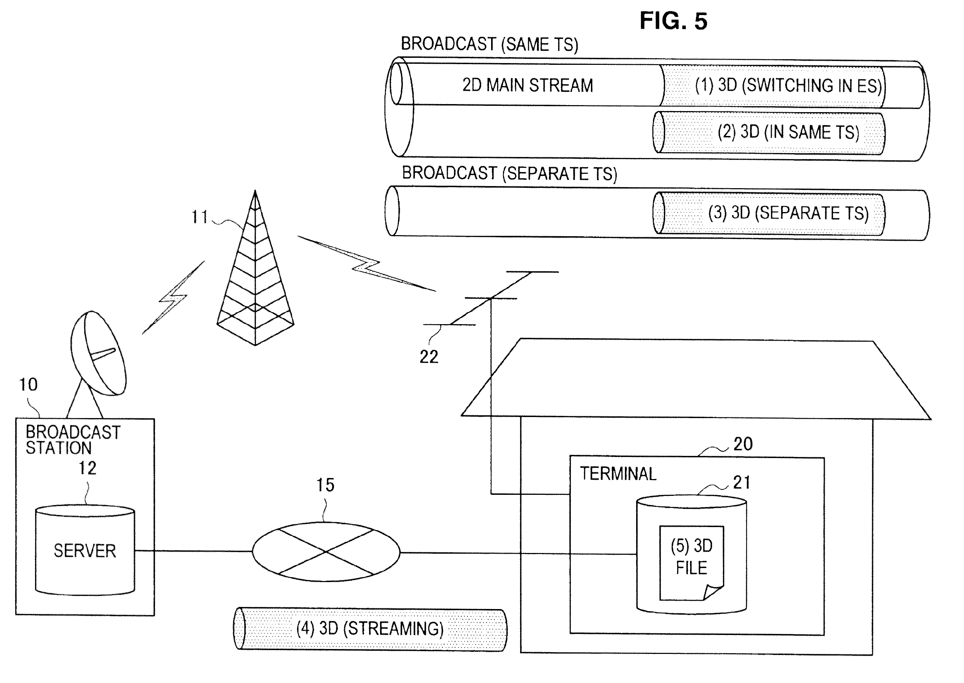

FIG. 5 is an explanatory diagram showing variations of the transmission media mode in the 3D video section. Streams and data are transmitted from a broadcast station 10, via an antenna 11 or a server 12, to a terminal 20 provided in each house. The numbers (1) to (5) in FIG. 5 respectively correspond to the methods (1) to (5) described above.

In the above-described methods (1) to (3), radio waves transmitted via the antenna 11 are received by an antenna 22 provided on each house, and streams are played back, thereby displaying 3D own the terminal 20. With the above-described method (4), the terminal 20 receives the data transmitted from the server 12 via a network 15 such as the Internet, and plays back the streams, thereby displaying 3D video on the terminal 20. Further, with the above-described method (5), data is downloaded in advance to a storage device 21 that is incorporated in the terminal 20 (or that is connected to the terminal 20), and the data in the storage device 21 is played back in the 3D video section, thereby displaying 3D video on the terminal 20.

### 4. Information necessary for 2D/3D switching

Next, information that is necessary when the receiver performs display switching between 2D video and 3D video will be described on the assumption that the above-described operation modes or transmission methods are used.

### 4-1. Preconditions

First, preconditions for defining the information that is necessary when the receiver performs display switching between 2D video and 3D video will be described. Note that the preconditions described below are only an example, and it is needless to mention that the preconditions are not limited to this example in the present invention.

(1) It is assumed that a 3D stream is used for each program (each content), or only used in a part of the program (the content). The part of the program (the content) corresponds to a case in which the 3D stream is used only in a particular scene or a particular CM, for example.

(2) An operation is assumed in which 2D video display by 2D stream playback is given priority, and when the 3D video section arrives and 3D video is viewed, the 3D stream is played back by switching to the 3D stream, thereby displaying 3D video. When the 3D video section ends, switching is performed again to return to the 2D video display by 2D stream playback.

(3) A broadcast station or a content provider transmits information by which the receiver can automatically perform the switching described in the above-described precondition (2).

When the broadcast station or the content provider generates and transmits the information that satisfies these preconditions, display switching between 2D video and 3D video can be performed on the receiver side.

### 4-2. Necessary information

Next, information that is necessary to satisfy the above-described preconditions will be described. The information is generated and transmitted by the broadcast station or the content provider.

(1) In order to perform the switching between 2D video and 3D video described in the above-described precondition (2), it is necessary to transmit information about a timing at which switching from 2D video to 3D video is performed and a timing at which switching from 3D video to 2D video is performed. This is because it is necessary to consider a case in which some pre-processing is necessary on the receiver side.

(2) It is necessary to transmit information of a 3D system used to display 3D video. Examples of the 3D system include a side by side system, a top and bottom system, a frame sequential system, and MVC. With the side by side (SBS) system, the screen is divided into two areas (left and right areas), and an image for the right eye and an image for the left eye are displayed in the respective areas. With the top and bottom system, the image for the right eye and the image for the left eye are displayed on the upper section and the lower section of the screen. With the frame sequential system, the image for the right eye and the image for the left eye are displayed in a time division manner. With multi-view video coding (MVC), multi-view video is collectively encoded and transmitted.

(3) It is necessary to transmit location information of a 3D stream because there is a wide variety of 3D stream distribution sources. Taking account of the variations of the transmission media mode in the above-described 3D video section, information to access the 3D stream is necessary. More specifically, it is necessary to transmit information of a media that transmits a 3D stream, and a uniform resource locator (URL) of a transmission source of the 3D stream.

Based on the above-described preconditions and the information necessary to satisfy the above-described preconditions, a method of transmitting information relating to display switching between 2D video and 3D video according to the embodiment of the present invention will be described in detail.

### 5. Method of transmitting 2D/3D switching information

Hereinafter, the method of transmitting the information relating to display switching between 2D video and 3D video according to the embodiment of the present invention will be described. In the present embodiment, three methods described below are used to transmit the information relating to display switching between 2D video and 3D video.
Method 1: The information is written in advance into meta information about a program (content) to be received.
Method 2: The information is written in an elementary stream (ES) or an adaptation field of a transport stream (TS).
Method 3: Method 1 and Method 2 are used in combination.

### 5-1. Method 1

With Method 1 in the present embodiment, the information relating to display switching between 2D video and 3D video is written into meta information about a program (content) to be received by the receiver, before the start of the program (content) that displays 3D video, and is transmitted from the broadcast station or the content provider. Thus, Method 1 achieves the display switching between 2D video and 3D video.

More specifically, for example, the information relating to display switching between 2D video and 3D video is written as a 3D segment descriptor for EITpf of each program and the broadcast station transmits program meta information. Note that 3D segment descriptors are allocated one for each 3D video section. When there are a plurality of 3D video sections in one program (content), a plurality of 3D segment descriptors are allocated.

The following information is described in the 3D segment descriptor.
(1) Segment ID
(2) Segment start NPT and length of time
(3) 3D system information
(4) 3D transmission media type information
(5) 3D stream location information

The segment ID (1) is information for uniquely identifying a 3D segment.

The segment start normal play time (NPT) and the length of time (2) is information about time from the beginning of the program (content) to the beginning of the 3D video section, and about the length of time of the 3D video section.

The 3D system information (3) is information relating to a 3D system used to display 3D video.

The 3D transmission media type information (4) is information relating to the transmission media mode in the 3D video section, as described above in "3. Transmission media mode in 3D video section".

The 3D stream location information (5) is information relating to a transmission source of the 3D stream when the 3D transmission media type information (4) is 3D stream transmission by streaming.

Method 1 can be used when the 3D video section is scheduled in advance. In addition, switching precision for 2D/3D switching is specified in units of seconds.

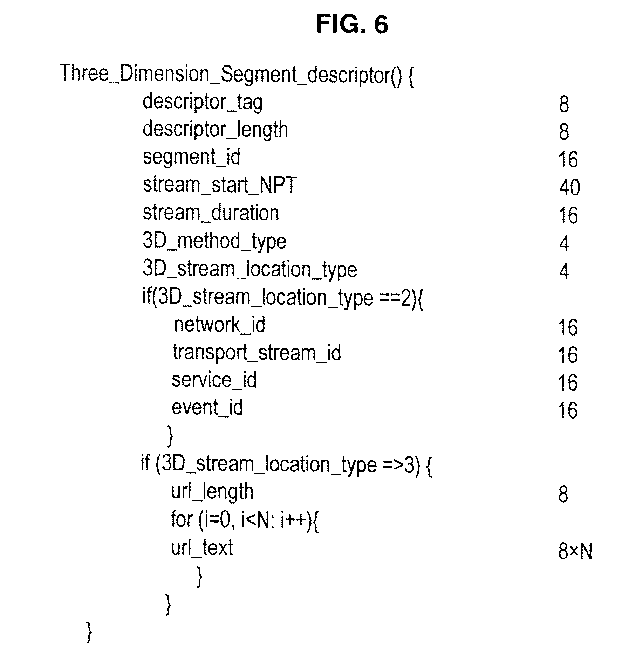

FIG. 6 is an explanatory diagram showing an example of the 3D segment descriptor for EITpf used in Method 1 described above. Hereinafter, the 3D segment descriptor for EITpf will be described using the example shown in FIG. 6. FIG. 6 also shows the length (the number of bits) of each area. Note that it is needless to mention that the length (the number of bits) of each area is not limited to that shown in FIG. 6.

"descriptor_tag" is a tag for identifying this "Three_Dimension_Segment_descriptor". "descriptor_length" is an area in which the length of this "Three_Dimension_Segment_descriptor" is stored.

"segment_id" corresponds to the above-described segment ID (1). Information for uniquely identifying the 3D segment is described as "segment_id".

"stream_start_NPT" and "stream_duration" correspond to the above-described segment start NPT and length of time (2). Information about the time period from the beginning of the program (content) to the beginning of the 3D video section in the segment ID described as "segment_id", and information about the length of time of the 3D video section are respectively described as "stream_start_NPT" and "stream_duration". Note that, if "segment_id" is a specific value such as 0, it indicates that the whole program is the 3D video section. In this case, the information of "stream_start_NPT" and "stream_duration" is not necessary and therefore may be nullified.

"3D_method_type" corresponds to the above-described 3D system information (3), and information about the 3D system used to display 3D video is described as "3D_method_type". For example, as shown in FIG. 6, as "3D_method_type", 1 may be described to indicate the side by side system, 2 may be described to indicate the top and bottom system, 3 may be described to indicate the frame sequential system, and 4 may be described to indicate MVC.

"3D_stream_location_type" corresponds to the above-described 3D media type information (4). Information relating to the transmission media mode in the 3D video section is described as "3D_stream_location_type". For example, as shown in FIG. 6, as "3D_stream_location_type", 0 may be described to indicate the same ES in the broadcast stream, 1 may be described to indicate a separate ES in the broadcast stream, 2 may be described to indicate a separate broadcasting TS, 3 may described to indicate unicast distribution by VOD, 4 may be described to indicate download, and 5 may be described to indicate multicast distribution.

From an if sentence (on the next line) onward, the description corresponds to the above-described 3D stream location information (5). In the example shown in FIG. 6, it becomes effective when "3D_stream_location_type" is neither 0 nor 1. When "3D_stream_location_type" is 2, "network_id", "transport_stream_id", "service_id", and "event_id" are described as information to select a broadcast service in which a 3D stream exists. When "3D_stream_location_type" is 3 or more, information about the length of URL information is described as "url_length", and URL information of an actual 3D stream distribution source is written as "url_text".

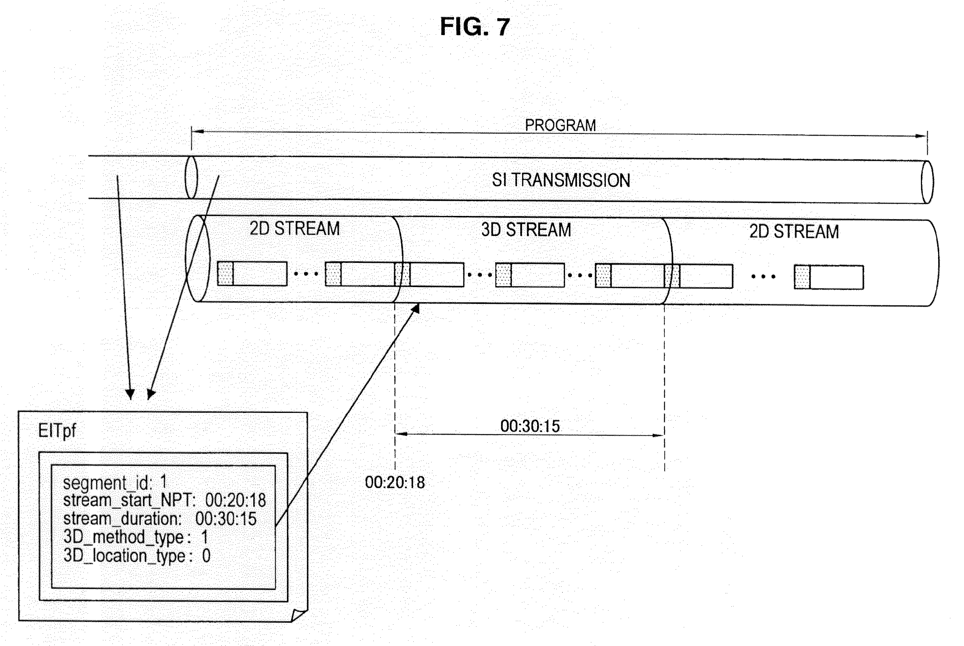

FIG. 7 is an explanatory diagram showing an operation example of Method 1, when using the type 1 operation mode (the operation mode in which switching between 2D video and 3D video is performed on one stream, as appropriate). In the type 1 operation mode, 2D and 3D streams are switched on the same stream as appropriate, and transmitted from the broadcast station or the content provider. Further, along with the stream, service information (SI) is transmitted from the broadcast station or the content provider.

In the example of EITpf shown in FIG. 7, as information in a current program, 1 is described as "segment_id", "00:20:18" (actually, a hexadecimal value is described) is described as "stream_start_NPT", and "00:30:15" (actually, a hexadecimal value is described) is described as "stream_duration". 1 (side by side system) is described as "3D_method_type", and 0 (the same ES in the broadcast stream) is described as "3D_stream_location_type". This means that the 3D video section starts after 20 minutes and 18 seconds from the start of the program, and continues for 30 minutes and 15 seconds. Further, from the example of EITpf shown in FIG. 7, it is apparent that 3D video is displayed on the screen using the side by side system, and the 3D stream is transmitted from the broadcast station or the content provider using the same ES in the broadcast stream.

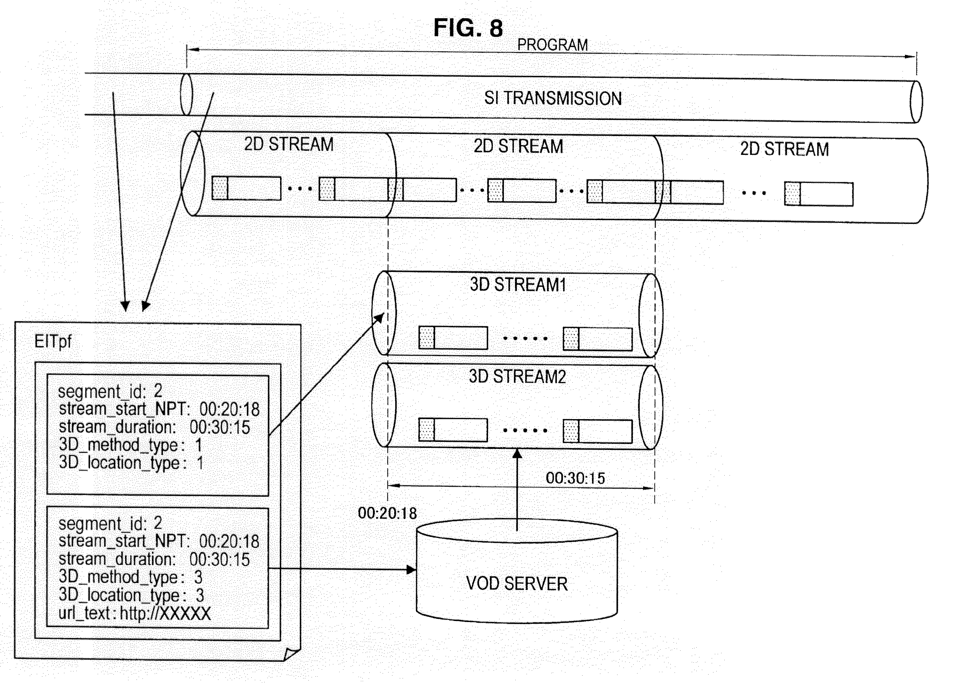

FIG. 8 is an explanatory diagram showing an operation example of Method 1, when using the type 2 operation mode (the operation mode in which a 3D stream is added based on AVC). In the type 2 operation mode, a 3D stream is added as a separate ES and transmitted from the broadcast station or the content provider. Further, along with the stream, service information (SI) is transmitted from the broadcast station or the content provider, in the same manner as in the case of type 1 described above.

In a first example of EITpf shown in FIG. 8, as information in a current program, 2 is described as "segment_id", "00:20:18" (actually, a hexadecimal value is described) is described as "stream_start_NPT", and "00:30:15" (actually, a hexadecimal value is described) is described as "stream_duration". 1 (side by side system) is described as "3D_method_type", and 1 (a separate ES in the broadcast stream) is described as "3D_stream_location_type". This means that the 3D video section starts after 20 minutes and 18 seconds from the start of the program, and continues for 30 minutes and 15 seconds. Further, from the first example of EITpf shown in FIG. 8, it is apparent that 3D video is displayed on the screen using the side by side system, and the 3D stream is transmitted from the broadcast station or the content provider using a separate ES in the broadcast stream.

In a second example of EITpf shown in FIG. 8, 2 is described as "segment_id", "00:20:18" (actually, a hexadecimal value is described) is described as "stream_start_NPT", and "00:30:15" (actually, a hexadecimal value is described) is described as "stream_duration". Further, 3 (frame sequential system) is described as "3D_method_type", and 3 (streaming from the VOD server) is described as "3D_stream_location_type". This means that the 3D video section starts after 20 minutes and 18 seconds from the start of the program, and continues for 30 minutes and 15 seconds. Further, from the second example of EITpf shown in FIG. 8, it is apparent that 3D video is displayed on the screen using the frame sequential system, and the 3D stream is transmitted from the broadcast station or the content provider by streaming from the VOD server.

Note that, in the second example of EITpf shown in FIG. 8, the 3D stream is transmitted, as the information in the current program, from the broadcast station or the content provider by streaming from the VOD server. Therefore, URL information of an actual 3D stream distribution source is described as "url_text.

The examples shown in FIG. 8 show a case in which different transmission systems are available in the 3D video section. In the 3D video section, a receiver compatible with the side by side system can display 3D video using the side by side system, and a receiver compatible with the frame sequential system can display 3D video using the frame sequential system.

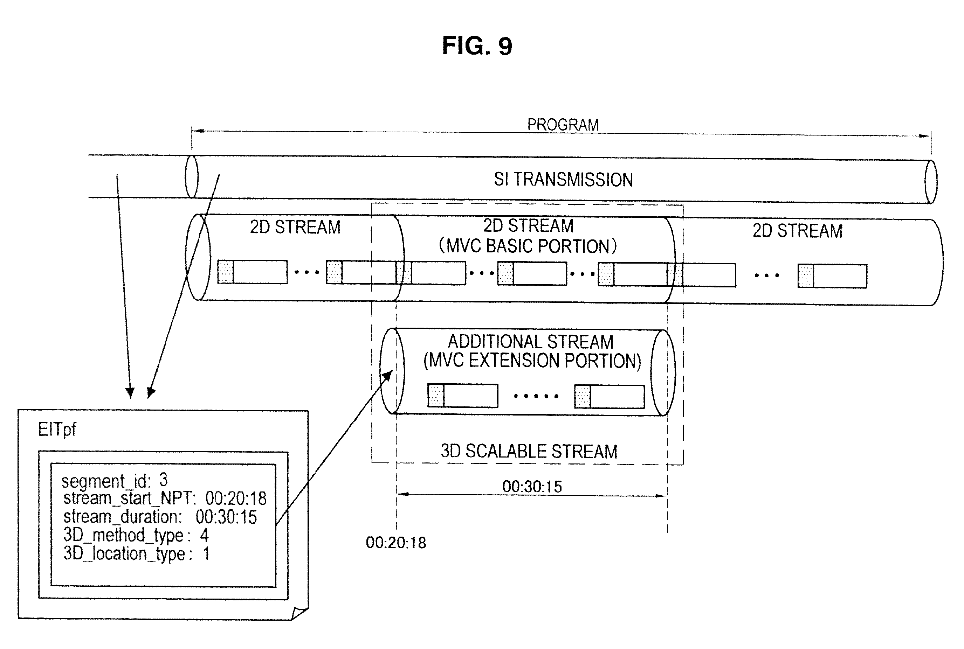

FIG. 9 is an explanatory diagram showing an operation example of Method 1, when using the type 3 operation mode (the operation mode based on MVC). In the type 3 operation mode, a 3D extension portion stream is transmitted from the broadcast station or the content provider only during the period for providing 3D video. Further, along with the stream, service information (SI) is transmitted from the broadcast station or the content provider, in the same manner as in the case of type 1 described above.

In the example of EITpf shown in FIG. 9, as information in a current program, 3 is described as "segment_id", "00:20:18" (actually, a hexadecimal value is described) is described as "stream_start_NPT", and "00:30:15" (actually, a hexadecimal value is described) is described as "stream_duration". Further, 4 (MVC) is described as "3D_method_type", and 1 (a separate ES in the broadcast stream) is described as "3D_stream_location_type". This means that the 3D video section starts after 20 minutes and 18 seconds from the start of the program, and continues for 30 minutes and 15 seconds. Further, from the example of EITpf shown in FIG. 9, it is apparent that 3D video is displayed using MVC, and a 3D extension stream is transmitted from the broadcast station using a separate ES in the broadcast stream with respect to a 3D base portion stream.

### 5-2. Method 2

Next, a method (which is based on Method 2) of transmitting information relating to display switching between 2D video and 3D video will be described. Method 2 is a method for describing information relating to display switching between 2D video and 3D video, in an elementary stream (ES) or an adaptation field of a transport stream (TS), the streams being received by the receiver. More specifically, the information relating to display switching between 2D video and 3D video is described, as "3D_switching_info", in a picture level header or a GOP level header of a video ES, or in a private area of the TS adaptation field.

With Method 2, during the 3D video section and the 2D video section immediately before the 3D video section starts, the broadcast station or the content provider transmits a stream in which the information relating to display switching between 2D video and 3D video is described. When the receiver receives the stream in which such information is described, it can perform display switching between 2D video and 3D video based on the information described in the stream.

With Method 2, the following information is described.
(1) Segment ID
(2) 2D/3D status
(3) Switching timing information
(4) 3D system information
(5) 3D transmission media type information
(6) 3D stream location information

The segment ID (1) is information for uniquely identifying the 3D segment.

The 2D/3D status (2) is information as to whether the current section is the 2D video section, whether 2D video will be switched to 3D video within a short time, whether the current section is the 3D video section, and whether 3D video will be switched to 2D video within a short time.

The switching timing information (3) is information about a time period from a time position at which the above-described information is located on the stream to a time position at which 2D to 3D video switching is performed (or a time position at which 3D to 2D video switching is performed). With Method 1, the information about the time period from the beginning of the program (content) to the beginning of the 3D video section, and the information about the length of time of the 3D video section are described in units of seconds. However, with Method 2, the time period until the switching is performed can be described in units of 100 milliseconds.

The 3D system information (4) is information relating to a 3D system used to display 3D video.

The 3D transmission media type information (5) is information relating to the transmission media mode in the 3D video section, as described in "3. Transmission media mode in 3D video section".

The 3D stream location information (6) is information about a 3D stream transmission source, when the 3D transmission media type information (5) is 3D stream transmission by streaming.

Unlike Method 1, Method 2 can be used even when the 3D video section is not scheduled in advance, by describing information in the stream. In addition, the switching precision for 2D/3D switching can be specified in units of 100 milliseconds.

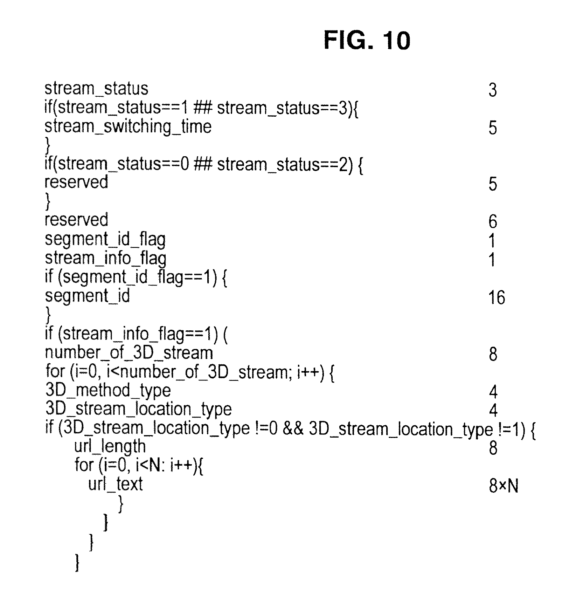

FIG. 10 is an explanatory diagram showing a description example of "3D_switching_info" of the information relating to display switching between 2D video and 3D video used in Method 2 described above. Hereinafter, the description example of "3D_switching_info" used in Method 2 will be described with reference to FIG. 10. FIG. 10 also shows the length (the number of bits) of each area. Note that it is needless to mention that the length of each area (the number of bits) is not limited to that shown in FIG. 10.

"stream_status" corresponds to the above-described 2D/3D status (2). A current stream status is described as "stream_status". In the example shown in FIG. 10, as "stream_status", 0 is described to indicate the 2D video section, 1 is described to indicate the section for which 2D to 3D video switching is about to be performed, and 3 is described to indicate the section for which 3D to 2D video switching is about to be performed.

When "stream_status" is 1 or 3, namely, when the position at which the information is described in the stream corresponds to the section for which 2D to 3D video switching is about to be performed (or the section for which 3D to 2D video switching is about to be performed), a time period until 2D to 3D stream switching is performed (or a time period until switching from 3D to 2D stream is performed) is described as "stream_switching_time". A time period until the switching is performed is described as "stream_switching_time" in units of 100 milliseconds.

On the other hand, when "stream_status" is 0 or 2, namely, when the position at which the information is described in the stream corresponds to the 2D video section or the 3D video section, the time period until the switching is performed is not described. Rather, nothing is described as a reserve area.

Next, sandwiching the reserve area of 6 bits, "segment_id_flag" and "stream_info_flag" are described. "segment_id_flag" is used as a flag to determine whether to use "segment_id" to be described later. Meanwhile, "stream_info_flag" is used as a flag to determine whether to use information relating to a later stage 3D stream.

"segment_id" corresponds to the above-described segment ID (1), and is information for uniquely identifying the 3D segment is described as "segment_id". Note that information about the segment ID is described as "segment_id" only when 1 is described as "segment_id_flag".

Information about the number of 3D streams is described as "number_of_3D_stream".

"3D_method_type" corresponds to the above-described 3D system information (4), and information about the 3D system used to display 3D video is described as "3D_method_type". For example, as shown in FIG. 10, as "3D_method_type", 1 may be described to indicate the side by side system, 2 may be described to indicate the top and bottom system, 3 may be described to indicate the frame sequential system, and 4 may be described to indicate MVC.

"3D_stream_location_type" corresponds to the above-described 3D media type information (5). Information relating to the transmission media mode in the 3D video section is described as "3D_stream_location_type". For example, as shown in FIG. 10, as "3D_stream_location_type", 0 may be described to indicate the same ES in the broadcast stream, 1 may be described to indicate a separate ES in the broadcast stream, 2 may be described to indicate a separate broadcasting TS, 3 may described to indicate unicast distribution by VOD, 4 may be described to indicate download, and 5 may be described to indicate multicast distribution.

From an if sentence (on the next line) onward, the description corresponds to the above-described 3D stream location information (6). In the example shown in FIG. 10, it becomes effective when "3D_stream_location_type" is neither 0 nor 1. Information about the length of URL information is described as "url_length", and URL information of an actual 3D stream distribution source is written as "url_text".

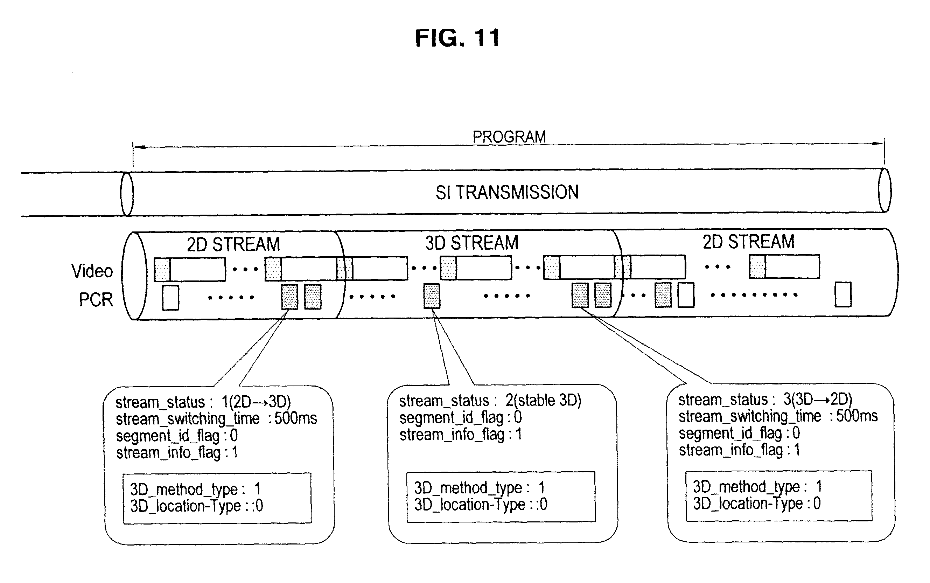

FIG. 11 is an explanatory diagram showing an operation example of Method 2, when using the type 1 operation mode (the operation mode in which switching between 2D video and 3D video is performed on one stream, as appropriate). In the type 1 operation mode, 2D and 3D streams are switched on the same stream as appropriate, and transmitted from the broadcast station or the content provider.

FIG. 11 shows a video and a program clock reference (PCR) packet. "3D_switching_info" defined by the field shown in FIG. 10 is described in the PCR packet. Note that, although "3D_switching_info" is described in the PCR packet in the example shown in FIG. 11, the present invention is not limited to this example. "3D_switching_info" may be described in a header section of the video packet.

In the example shown in FIG. 11, when 2D to 3D video switching is about to be performed, if a 2D stream is transmitted from the broadcast station, 1 (information indicating that the current section is the section for which 2D to 3D video switching is about to be performed) is described as "3D_switching_info" of the PCR packet, and 500 milliseconds (actually, a hexadecimal value is described) is described as "stream_switching_time". Further, 0 (non-use of "segment_id") is described as "segment_id_flag", and 1 is described as "stream_info_flag". In addition, 1 (side by side system) is described as "3D_method_type", and 0 (the same ES in the broadcast stream) is described as "3D_stream_location_type".

When 2D to 3D stream switching is performed, information of "3D_switching_info" is described. More specifically, 2 (information indicating that the current section is the 3D video section) is described as "3D_switching_info" of the PCR packet, 0 (non-use of "segment_id") is described as "segment_id_flag", and 1 is described as "stream_info_flag". Then, 1 (side by side system) is described as "3D_method_type", and 0 (the same ES in the broadcast stream) is described as "3D_stream_location_type".

Note that, in the 3D video section, taking account of switching to a channel that displays 3D video from another channel, a PCR packet in which 2 is described as "3D_switching_info" is periodically transmitted from the broadcast station.

When the 3D video section ends and 3D to 2D video switching is about to be performed, information of "3D_switching_info" is described. More specifically, if a 3D stream is being transmitted from the broadcast station, 3 (information indicating that the current section is the section for which 3D to 2D video switching is about to be performed) is described as "3D_switching_info" of the PCR packet, and 500 milliseconds (actually, a hexadecimal value is described) is described as "stream_switching_time". Further, 0 (non-use of "segment_id") is described as "segment_id_flag", and 1 is described as "stream_info_flag". In addition, 1 (side by side system) is described as "3D_method_type", and 0 (the same ES in the broadcast stream) is described as "3D_stream_location_type".

The information is described in the stream and transmitted from the broadcast station or the content distribution service provider in this manner. Thus, it is possible to switch between 2D video and 3D video and to perform display on the receiver side.

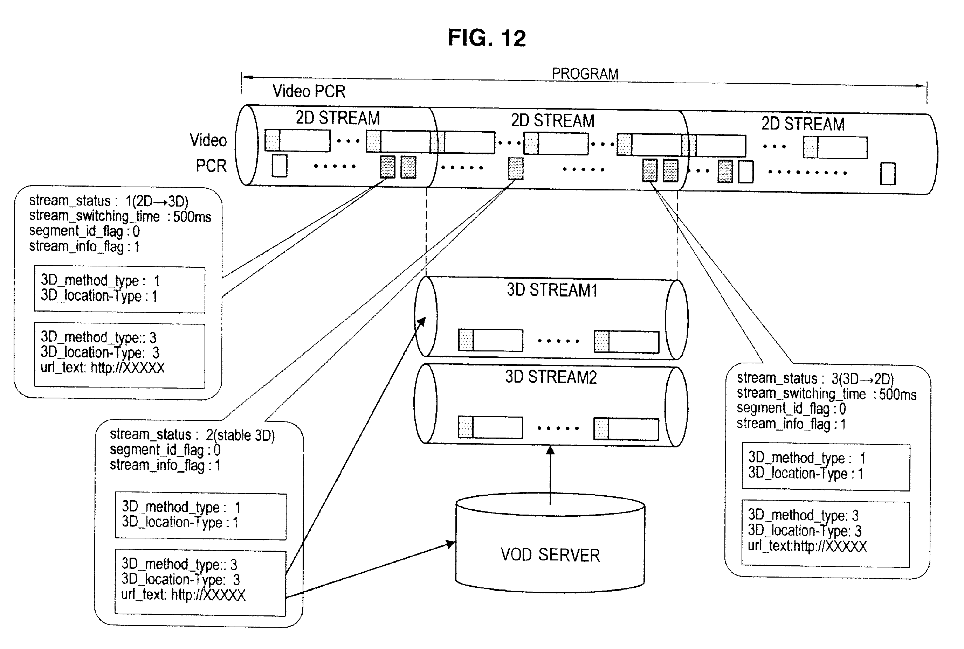

FIG. 12 is an explanatory diagram showing an operation example of Method 2, when using the type 2 operation mode (the operation mode in which a 3D stream is added based on AVC). In the type 2 operation mode, a 3D stream is added as a separate ES and transmitted from the broadcast station or the content provider.

FIG. 12 shows a video packet and a program clock reference (PCR) packet. "3D_switching_info" defined by the field shown in FIG. 10 is described in the PCR packet of the 2D stream. Note that, although "3D_switching_info" is described in the PCR packet of the 2D stream in the example shown in FIG. 12, the present invention is not limited to this example. "3D_switching_info" may be described in a header section of the video packet of the 2D stream.

In the example shown in FIG. 12, when 2D to 3D video switching is about to be performed, information of "3D_switching_info" is described. More specifically, if a 2D stream is being transmitted from the broadcast station, 1 (information indicating that the current section is the section for which 2D to 3D video switching is about to be performed) is described as "3D_switching_info" of the PCR packet, and 500 milliseconds (actually, a hexadecimal value is described) is described as "stream_switching_time". Further, 0 (non-use of "segment_id") is described as "segment_id_flag", and 1 is described as "stream_info_flag". In addition, 1 (side by side system) is described as "3D_method_type", and 1 (a separate ES in the broadcast stream) is described as "3D_stream_ocation_type".

When 2D to 3D stream switching is performed, information of "3D_switching_info" is described. More specifically, 2 (information indicating that the current section is the 3D video section) is described as "3D_switching_info" of the PCR packet, 0 (non-use of "segment_id") is described as "segment_id_flag", and 1 is described as "stream_info_flag". Then, 1 (side by side system) is described as "3D_method_type", and 1 (a separate ES in the broadcast stream) is described as "3D_stream_location_type". Further, when the 3D stream is transmitted from the broadcast station or the content provider by streaming from the VOD server, 3 (frame sequential system) is described as "3D_method_type", and 3 (streaming from the VOD server) is described as "3D_stream_location_type".

Note that, in the 3D video section, taking account of switching to a channel that displays 3D video from another channel, the PCR packet in which 2 is described as "3D_switching_info" is periodically transmitted from the broadcast station.

When the 3D video section ends and 3D to 2D video switching is about to be performed, information of "3D_switching_info" is described. More specifically, if a 3D stream is being transmitted from the broadcast station, 3 (information indicating that the current section is the section for which 3D to 2D video switching is about to be performed) is described as "3D_switching_info" of the PCR packet, and 500 milliseconds (actually, a hexadecimal value is described) is described as "stream_switching_time". Further, 0 (non-use of "segment_id") is described as "segment_id_flag", and 1 is described as "stream_info_flag". In addition, 1 (side by side system) is described as "3D_method_type", and 1 (a separate ES in the broadcast stream) is described as "3D_stream_location_type".

The information is described in the stream and transmitted from the broadcast station or the content distribution service provider in this manner. Thus, it is possible to switch between 2D video and 3D video and to perform display on the receiver side.

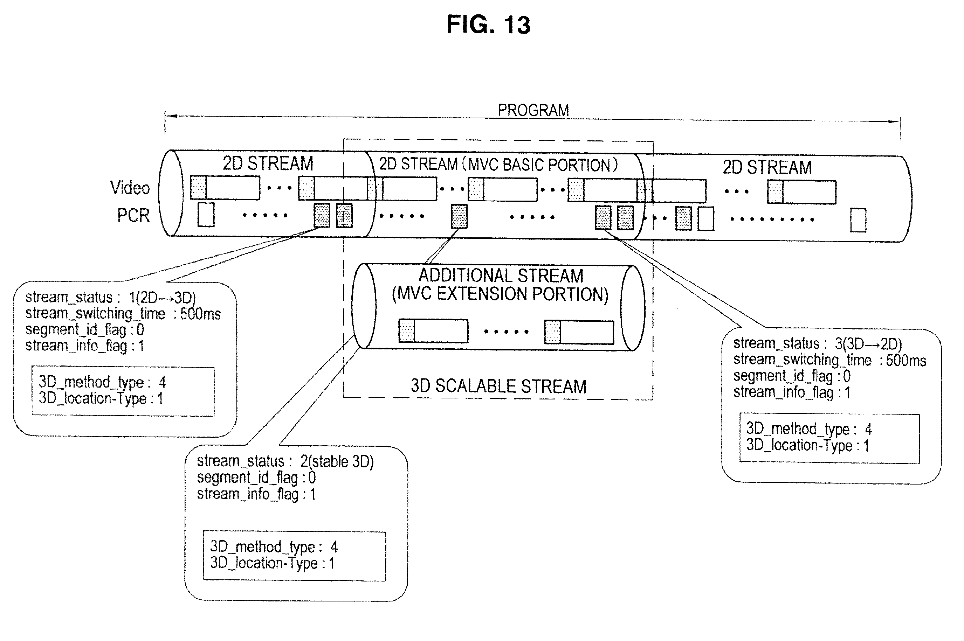

FIG. 13 is an explanatory diagram showing an operation example of Method 2, when using the type 3 operation mode (the operation mode based on MVC). In the type 3 operation mode, a 3D extension portion stream is transmitted from the broadcast station or the content provider only during the period for providing 3D video.

FIG. 13 shows a video packet and a PCR packet. "3D_switching_info" defined by the field shown in FIG. 10 is described in the PCR packet of the 2D stream. Note that, although "3D_switching_info" is described in the PCR packet of the 2D stream in the example shown in FIG. 13, the present invention is not limited to this example. "3D_switching_info" may be described in the header section of the video packet of the 2D stream.

In the example shown in FIG. 13, when 2D to 3D video switching is about to be performed, information of "3D_switching_info" is described. More specifically, if a 2D stream is being transmitted from the broadcast station, 1 (information indicating that the current section is the section for which 2D to 3D video switching is about to be performed) is described as "3D_switching_info" of the PCR packet, and 500 milliseconds (actually, a hexadecimal value is described) is described as "stream_switching_time". Further, 0 (non-use of "segment_id") is described as "segment_id_flag", and 1 is described as "stream_info_flag". In addition, 4 (MVC) is described as "3D_method_type", and 1 (a separate ES in the broadcast stream) is described as "3D_stream_location_type".

When 2D to 3D stream switching is performed, information of "3D_switching_info" is described. More specifically, 2 (information indicating that the current section is the 3D video section) is described as "3D_switching_info" of the PCR packet, 0 (non-use of "segment_id") is described as "segment_id_flag", and 1 is described as "stream_info_flag". Then, 4 (MVC) is described as "3D_method_type", and 1 (a separate ES in the broadcast stream) is described as "3D_stream_location_type".

Note that, in the 3D video section, taking account of switching to a channel that displays 3D video from another channel, the PCR packet in which 2 is described as "3D_switching_info" is periodically transmitted from the broadcast station.

When the 3D video section ends and 3D to 2D video switching is about to be performed, information of "3D_switching_info" is described. More specifically, if a 3D stream is being transmitted from the broadcast station, 3 (information indicating that the current section is the section for which 3D to 2D video switching is about to be performed) is described as "3D_switching_info" of the PCR packet, and 500 milliseconds (actually, a hexadecimal value is described) is described as "stream_switching_time". Further, 0 (non-use of "segment_id") is described as "segment_id_flag", and 1 is described as "stream_info_flag". In addition, 4 (MVC) is described as "3D_method_type", and 1 (a separate ES in the broadcast stream) is described as "3D_stream_location_type".

The information is described in the stream and transmitted from the broadcast station or the content distribution service provider in this manner. Thus, it is possible to switch between 2D video and 3D video and to perform display on the receiver side.

### 5.3. Method 3

Next, a method (which is based on Method 3) of transmitting information relating to display switching between 2D video and 3D video will be described. Method 3 uses Method 1 and Method 2 simultaneously, or uses them separately according to need. Thus, information relating to display switching between 2D video and 3D video is transmitted.

For example, when the 3D video section in the program or content is determined in advance, and when precision of display switching between 2D video and 3D video can be specified in units of seconds, Method 1 alone is used.

For example, when transmission of a 3D stream is determined but a transmission time of the 3D stream is not determined (for example, when a commercial is displayed as 3D video), Method 2 alone is used.

For example, when transmission of a 3D stream is determined in advance but a transmission time of the 3D stream is not determined, or when a precision of less than a second is to be used as the switching precision, Method 1 is used to transmit the 3D system information and the 3D transmission media type information as program meta information, and Method 2 is used to transmit a stream in which switching timing information is described.

In this manner, using Method 1 and Method 2 together, the information for switching between 2D video and 3D video is transmitted from the broadcast station or the content provider. Thus, the broadcast station or the content provider can flexibly set the 3D video section.

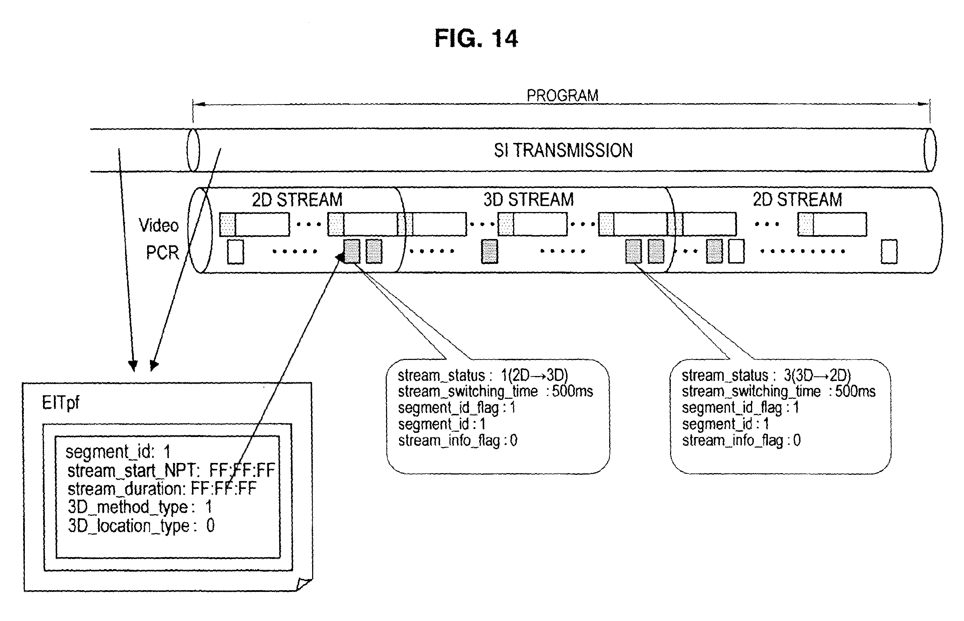

FIG. 14 is an explanatory diagram showing an operation example of Method 3, when using the type 1 operation mode (the operation mode in which switching between 2D video and 3D video is performed on one stream, as appropriate). In the type 1 operation mode, 2D and 3D streams are switched on the same stream as appropriate, and transmitted from the broadcast station or the content provider. Further, along with the stream, service information (SI) is transmitted from the broadcast station or the content provider.

The example shown in FIG. 14 shows a case in which, when transmission of a 3D stream is determined in advance but a transmission time of the 3D stream is not determined, information other than time information is described in the 3D segment descriptor for EITpf, and the time information is described as "3D_switching_info" of the PCR packet in the stream.

In the example of EITpf shown in FIG. 14, 1 is described as "segment_id", FF:FF:FF (actually, a hexadecimal value is described) indicating that time is indefinite is described as "stream_start_NPT", and FF:FF:FF (actually, a hexadecimal value is described) indicating that time is indefinite is described as "stream_duration". Further, 1 (side by side system) is described as "3D_method_type", and 0 (the same ES in the broadcast stream) is described as "3D_stream_location_type". This means that the transmission of the 3D stream has been determined, but the start time of the 3D video section and the continuation time of the 3D video section have not been determined. Further, from the example of EITpf shown in FIG. 14, it is apparent that 3D video is displayed on the screen using the side by side system, and the 3D stream is transmitted from the broadcast station or the content provider the same ES in the broadcast stream.

When 2D to 3D video switching is about to be performed, information of "3D_switching_info" is described. More specifically, if a 2D stream is being transmitted from the broadcast station, 1 (information indicating that the current section is the section for which 2D to 3D video switching is about to be performed) is described as "3D_switching_info" of the PCR packet, and 500 milliseconds (actually, a hexadecimal value is described) is described as "stream_switching_time". Further, 1 (use of "segment_id") is described as "segment_id_flag", 1 is described as "segment_id", and 0 is described as "stream_info_flag". The value described as "segment_id" corresponds to the value of "segment_id" in the 3D segment descriptor of EITpf. Since 0 is described as "stream_info_flag", the receiver receives the 3D system information and the 3D transmission media type information by referring to the information described in the 3D segment descriptor of EITpf, which is received in advance.

When the 3D video section ends and 3D to 2D video switching is about to be performed, information of "3D_switching_info" is described. More specifically, if a 3D stream is being transmitted from the broadcast station, 3 (information indicating that the current section is the section for which 3D to 2D video switching is about to be performed) is described as "3D_switching_info" of the PCR packet, and 500 milliseconds (actually, a hexadecimal value is described) is described as "stream_switching_time". Further, 1 (use of "segment_id") is described as "segment_id_flag", 1 is described as "segment_id", and 0 is described as "stream_info_flag".

In this manner, in the type 1 operation mode (the operation mode in which switching between 2D video and 3D video is performed on one stream, as appropriate), basic information of the 3D video is described in EITpf, and information about the start time and the continuation time of the 3D video section is described in the stream and transmitted from the broadcast station or the content distribution service provider. As a result, even when the start time and the continuation time of the 3D video section have not been determined, it is possible to switch between 2D video and 3D video and to perform display on the receiver side.

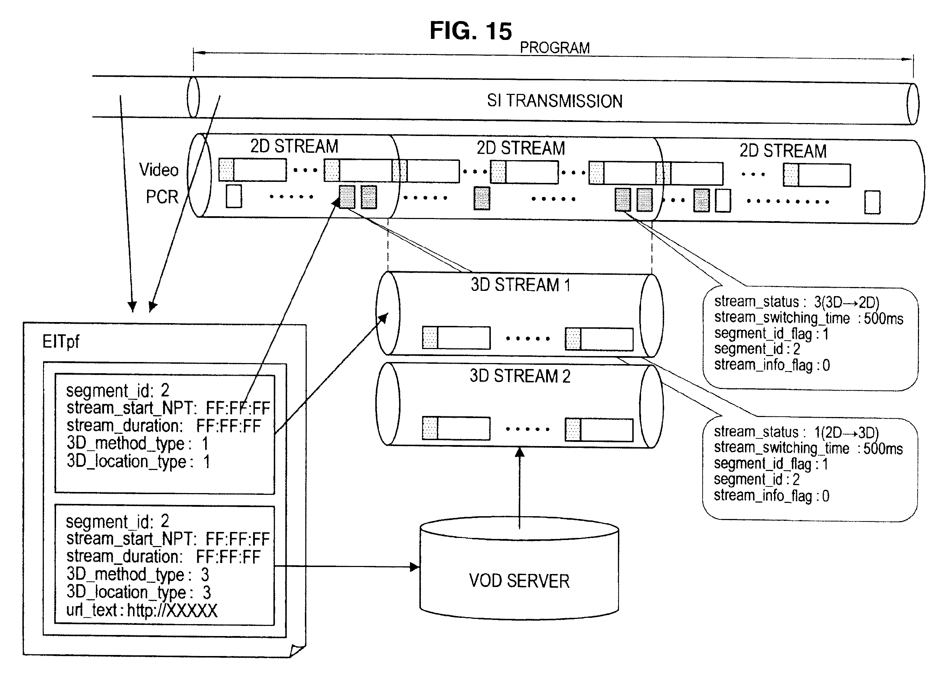

FIG. 15 is an explanatory diagram showing an operation example of Method 3, when using the type 2 operation mode (the operation mode in which a 3D stream is added based on AVC). In the type 2 operation mode, a 3D stream is added as a separate ES and transmitted from the broadcast station or the content provider.

FIG. 15 shows a video packet and a PCR packet. "3D_switching_info" defined by the field shown in FIG. 10 is described in the PCR packet of the 2D stream. Note that, although "3D_switching_info" is described in the PCR packet of the 2D stream in the example shown in FIG. 15, the present invention is not limited to this example. "3D_switching_info" may be described in the header section of the video packet of the 2D stream.

In the example of EITpf shown in FIG. 15, 2 is described as "segment_id", FF:FF:FF (actually, a hexadecimal value is described) indicating that time is indefinite is described as "stream_start_NPT", and FF:FF:FF (actually, a hexadecimal value is described) indicating that time is indefinite is described as "stream_duration". Further, 1 (side by side system) is described as "3D_method_type", and 1 (a separate ES in the broadcast stream) is described as "3D_stream_location_type". This means that the transmission of the 3D stream has been determined, but the start time of the 3D video section and the continuation time of the 3D video section have not been determined. Further, from the example of EITpf shown in FIG. 15, it is apparent that 3D video is displayed on the screen using the side by side system, and the 3D stream is transmitted from the broadcast station or the content provider using a separate ES in the broadcast stream.

When 2D to 3D video switching is about to be performed, information of "3D_switching_info" is described. More specifically, if a 2D stream is being transmitted from the broadcast station, 1 (information indicating that the current section is the section for which 2D to 3D video switching is about to be performed) is described as "3D_switching_info" of the PCR packet, and 500 milliseconds (actually, a hexadecimal value is described) is described as "stream_switching_time". Further, 1 (use of "segment_id") is described as "segment_id_flag", 2 is described as "segment_id", and 0 is described as "stream_info_flag". The value described as "segment_id" corresponds to the value of "segment_id" in the 3D segment descriptor of EITpf. Since 0 is described as "stream_info_flag", the receiver receives the 3D system information and the 3D transmission media type information by referring to the information described in the 3D segment descriptor of EITpf, which is received in advance.

When the 3D video section ends and 3D to 2D video switching is about to be performed, information of "3D_switching_info" is described. More specifically, if a 3D stream is being transmitted from the broadcast station, 3 (information indicating that the current section is the section for which 3D to 2D video switching is about to be performed) is described as "3D_switching_info" of the PCR packet, and 500 milliseconds (actually, a hexadecimal value is described) is described as "stream_switching_time". Further, 1 of "segment_id") is described as "segment_id_flag", 2 is described as "segment_id", and 0 is described as "stream_info_flag".

In this manner, even in the type 2 operation mode (the operation mode in which a 3D stream is added based on AVC), basic information of the 3D video is described in EITpf, and information about the start time and the continuation time of the 3D video section is described in the stream and transmitted from the broadcast station or the content distribution service provider. As a result, even when the start time and the continuation time of the 3D video section have not been determined, it is possible to switch between 2D video and 3D video and to perform display on the receiver side.

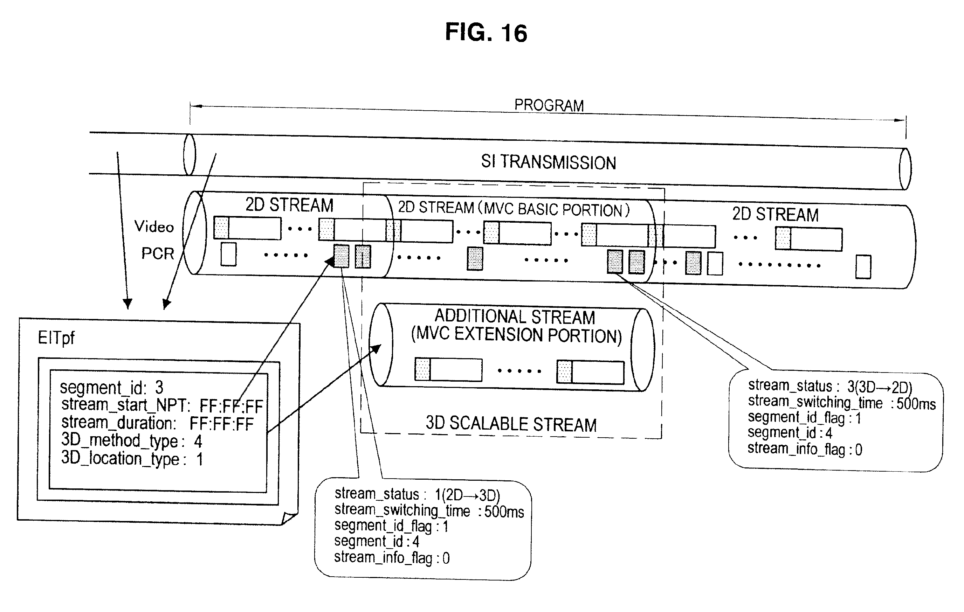

FIG. 16 is an explanatory diagram showing an operation example of Method 3, when using the type 3 operation mode (the operation mode based on MVC). In the type 3 operation mode, the 3D stream is added to the MVC extension portion and transmitted from the broadcast station or the content provider only during the period for providing 3D video.

FIG. 16 shows a video packet and a PCR packet. "3D_switching_info" defined by the field shown in FIG. 10 is described in the PCR packet of the 2D stream. Note that, although "3D_switching_info" is described in the PCR packet of the 2D stream in the example shown in FIG. 16, the present invention is not limited to this example. "3D_switching_info" may be described in the header section of the video packet of the 2D stream.

In the example of EITpf shown in FIG. 16, 3 is described as "segment_id", FF:FF:FF (actually, a hexadecimal value is described) indicating that time is indefinite is described as "stream_start_NPT", and FF:FF:FF (actually, a hexadecimal value is described) indicating that time is indefinite is described as "stream_duration". Further, 4 (MVC) is described as "3D_method_type", and 1 (a separate ES in the broadcast stream) is described as "3D_stream_location_type". This means that the transmission of the 3D stream has been determined, but the start time of the 3D video section and the continuation time of the 3D video section have not been determined. Further, from the example of EITpf shown in FIG. 16, it is apparent that 3D video is displayed on the screen using MVC, and the 3D stream is transmitted from the broadcast station or the content provider using a separate ES in the broadcast stream.

When 2D to 3D video switching is about to be performed, information of "3D_switching_info" is described. More specifically, if a 2D stream is being transmitted from the broadcast station, 1 (information indicating that the current section is the section for which 2D to 3D video switching is about to be performed) is described as "3D_switching_info" of the PCR packet, and 500 milliseconds (actually, a hexadecimal value is described) is described as "stream_switching_time". Further, 1 (use of "segment_id") is described as "segment_id_flag", 3 is described as "segment_id", and 0 is described as "stream_info_flag". The value described as "segment_id" corresponds to the value of "segment_id" in the 3D segment descriptor of EITpf. Since 0 is described as "stream_info_flag", the receiver receives the 3D system information and the 3D transmission media type information by referring to the information described in the 3D segment descriptor of EITpf, which is received in advance.

When the 3D video section ends and 3D to 2D video switching is about to be performed, information of "3D_switching_info" is described. More specifically, if a 3D stream is being transmitted from the broadcast station, 3 (information indicating that the current section is the section for which 3D to 2D video switching is about to be performed) is described as "3D_switching_info" of the PCR packet, and 500 milliseconds (actually, a hexadecimal value is described) is described as "stream_switching_time". Further, 1 (use of "segment_id") is described as "segment_id_flag", 3 is described as "segment_id", and 0 is described as "stream_info_flag".

In this manner, even in the type 3 operation mode (the operation mode based on MVC), basic information of the 3D video is described in EITpf, and information about the start time and the continuation time of the 3D video section is described in the stream and transmitted from the broadcast station or the content distribution service provider. As a result, even when the start time and the continuation time of the 3D video section have not been determined, it is possible to switch between 2D video and 3D video and to perform display on the receiver side.

### 6. 2D/3D switching process within program

Since the program meta information and the stream in which the above-described information is described are transmitted from the broadcast station or the content provider, the receiver can switch between 2D video and 3D video and perform display. Hereinafter, a display switching process between 2D video and 3D video on the receiver will be described.

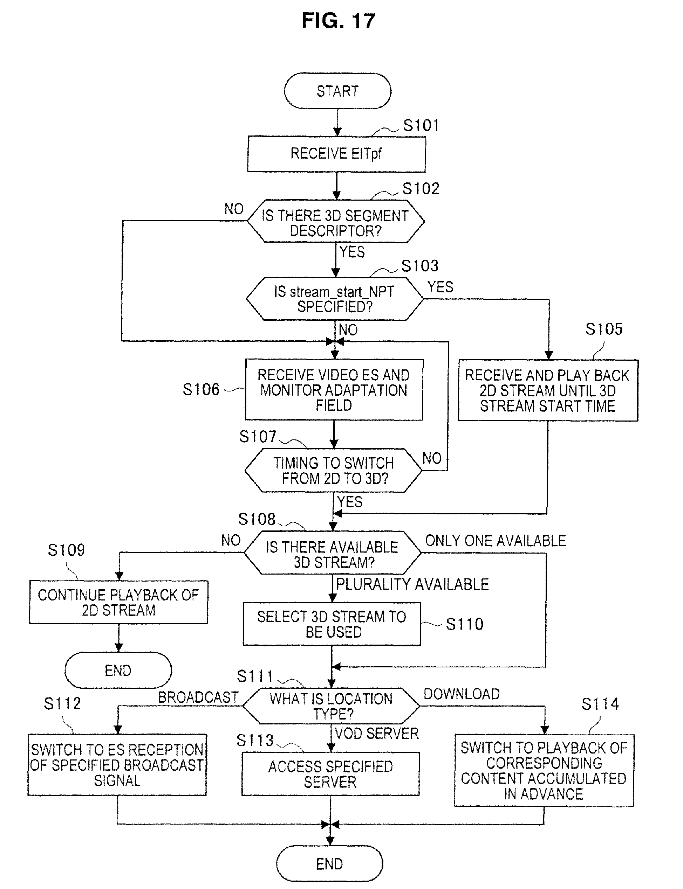

FIG. 17 is a flowchart showing a display switching process between 2D video and 3D video on the terminal 20 according to the embodiment of the present invention. Hereinafter, the display switching process between 2D video and 3D video on the terminal 20 will be described with reference to FIG. 17.

The terminal 20 receives EITpf included in service information (SI) transmitted from the broadcast station or the content provider (step S101), and determines whether or not the received EITpf includes a 3D segment descriptor (step S102). When it is determined at step S102 that the received EITpf includes the 3D segment descriptor, the terminal 20 determines whether or not a specific time is specified by "stream_start_NPT" of the 3D segment descriptor (step S103). When it is determined at step S103 that the specific time is specified by "stream_start_NPT" of the 3D segment descriptor, the terminal 20 receives and plays back the 2D stream and displays 2D video until the start time of the 3D stream (step S105). Further, when EITpf is received at step S101, not only the description of the current program (present program) but also the description of the next program (following program) is referred to. If it is indicated that the whole program provides 3D video (if the segment ID is 0, for example) in the next program, the 2D stream is received and played back until the start time of the next program, and 2D video is thereby displayed (step S105).

On the other hand, when the 3D segment descriptor indicates that only a part of the program provides 3D video, and when it is determined at step S103 that the specific time is not specified by "stream_start_NPT", or when it is determined at step S102 that the received EITpf does not include the 3D segment descriptor, the terminal 20 receives a video ES, and monitors an adaptation field of the video ES (step S106). The terminal 20 receives a 2D stream and monitors the adaptation field of the video ES while displaying 2D video. The terminal 20 thereby determines whether or not a switching timing from 2D video to 3D video has arrived (step S107).

When it is determined, as a result of monitoring the adaptation field of the video ES, that the switching timing from 2D video to 3D video has not arrived, the process returns to step S107 described above. While displaying 2D video, the monitoring of the adaptation field of the video ES is continued to determine whether or not the switching timing from 2D video to 3D video has arrived.

On the other hand, when the arrival of the switching timing from 2D video to 3D video is detected as a result of monitoring the adaptation field of the video ES, or when the time described as "stream_start_NPT" of the 3D segment descriptor arrives in the case where EITpf is included in SI transmitted from the broadcast station or the content provider, the terminal 20 determines whether or not an available 3D stream exists (step S108).

When the terminal 20 determines, as a result of the determination at step S108 described above, that an available 3D stream does not exist, the terminal 20 plays back the 2D stream and continues to display 2D video (step S109).

When the terminal 20 determines, as a result of the determination at step S108 described above, that a plurality of available 3D streams exist, the terminal 20 selects, from among the plurality of available 3D streams, a single 3D stream to be used (step S110). When the 3D stream is selected, a priority order may be set in advance in the terminal 20, or the terminal 20 may allow its user to perform the selection.

When the terminal 20 determines, as a result of the determination at step S108 described above, that only one available 3D stream exists, or when the terminal 20 selects a single 3D stream to be used at step S110 described above, the terminal 20 then refers to the 3D segment descriptor of EITpf, and to information of "3D_stream_location_type" described in "3D_switching_info" in the stream (step S111). As a result of referring to the information of "3D_stream_location_type", when it is confirmed that the 3D stream is transmitted by broadcast, the terminal 20 receives the 3D stream by switching to a broadcast signal specified by EITpf or the stream (step S112).

As a result of referring to the information of "3D_stream_location_type" when it is confirmed that the 3D stream is transmitted from the VOD server (for example, the server 12), the terminal 20 accesses the server specified by EITpf or the stream, and receives the 3D stream (step S113).

As a result of referring to the information of "3D_stream_location_type", when it is confirmed that data accumulated in advance by download is used, the terminal 20 switches to playback of the accumulated content that is specified (step S114).

Since the receiver 20 receives the information transmitted from the broadcast station or the content provider in this manner, the terminal 20 that is capable of displaying 3D video can perform display by switching between 2D video and 3D video automatically or in accordance with an instruction from the user.

The display switching process between 2D video and 3D video on the terminal 20 according to the embodiment of the present invention is described above with reference to FIG. 17.

### 7. 3D switching of separate broadcasting TS using 3D stream location information

Next, based on Method 1 described above, a transmission method will be described in which switching between 2D video and 3D video is performed using the 3D stream location information when the value of the above-described 3D_stream_location_type is 2 in the case of type 2 (or type 3) described above, namely, when a 3D stream exists in a separate TS. The 3D stream location information is information of a video switching destination. This transmission method is used when 2D video is transmitted on a channel that broadcasts 2D video (a 2D channel) and 3D video is transmitted on another channel (a 3D channel) in a specified program or in a specified section of the specified program. This transmission method is used in the case of type 2 (or type 3) described above. Note that, in the description below, for explanatory convenience, the "3D stream location information" is referred to as "link information", and the "stream location type" is referred to as the "link type".

In this case, on the 2D channel, information indicating that "other service (another channel)", which is described as the link type, is transmitted as link destination information. The link destination information is used to receive 3D video automatically on the receiving side, or in accordance with a user operation. In addition, control information is transmitted. The control information includes a network ID of the other service, a transport stream ID, a service ID and an event ID.

On the other hand, on another channel (a 3D channel) of the link destination, control information is transmitted as return destination information. The return destination information is used to return to the 2D channel when switching to 2D video display is performed on the receiving side automatically or in accordance with a user operation during the program or after the program. The control information includes the network ID, the transport stream ID and the service ID of the original 2D channel.

Note that a case is considered in which the 3D channel is linked by a plurality of 2D channels. When 2D to 3D video switching is automatically performed, the terminal that receives broadcast can store the control information of the original 2D channel. When 3D to 2D video switching is performed automatically or in accordance with a user operation, it is possible to perform control to return to the 2D channel in accordance with the return destination information included in the control information transmitted on the 3D channel.

The 3D channel can also be viewed hy the user performing channel selection on the terminal that receives broadcast. When the user selects the 3D channel, the terminal may continue to play back the same channel without depending on the return destination information transmitted on the 3D channel.

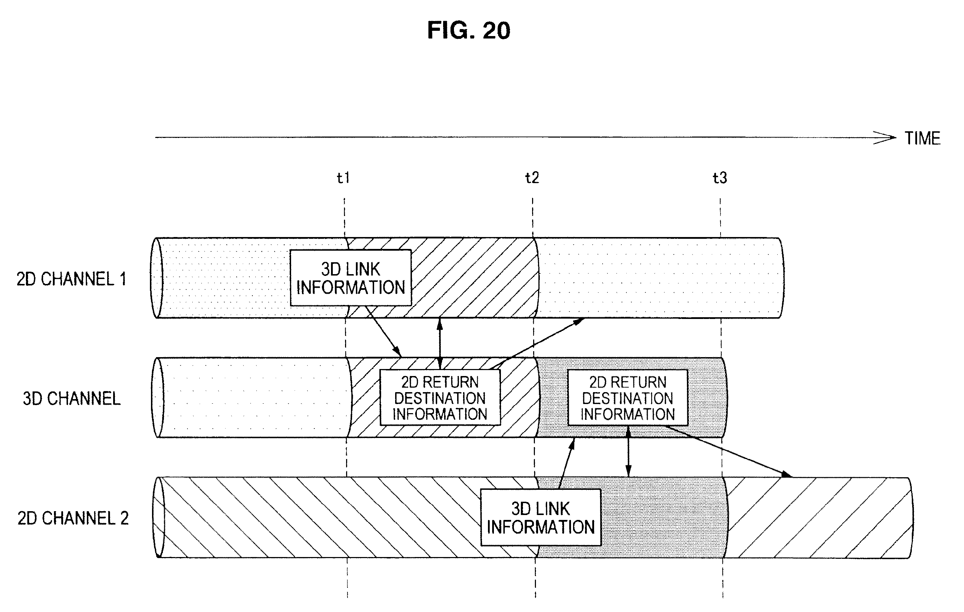

FIG. 20 is an explanatory diagram showing an overview of 2D/3D switching when link information is used. FIG. 20 shows a 2D channel 1 and a 2D channel 2 that broadcast 2D video, and a 3D channel that broadcasts 3D video. In FIG. 20, during a period from a time t1 to a time t2, the program that is broadcast on the 2D channel 1 is also broadcast on the 3D channel as 3D video. Further, during a period from the time t2 to a time t3, the program that is broadcast on the 2D channel 2 is also broadcast on the 3D channel as 3D video.

In these cases, the above-described information is transmitted to the 2D channel 1 and the 2D channel 2. More specifically, to the 2D channel 1 and the 2D channel 2, the control information is transmitted that includes the network ID, the transport stream ID, the service ID and the event ID of the 3D dedicated channel. Further, to the 3D dedicated channel, the control information is transmitted that includes the network ID, the transport stream ID and the service ID of the 2D channel 1 and the 2D channel 2, which are return destinations.

In the present embodiment, in either case, the link information is described in EITschedule and EITpf and is transmitted. Information elements of the link information transmitted on the 2D channel include the link type of 3D video and location information of the link destination of the 3D video. As the link type of the 3D video, an appropriate link type is selected from the variations explained in the above-described "Transmission media mode in the 3D video section", and is transmitted. When switching between 2D video and 3D video is performed using the link information, a link type corresponding to the "separate broadcasting TS" explained in the above-described "Transmission media mode in the 3D video section" is selected as the link type. As a link destination location, an access destination of an appropriate 3D stream is selected depending on the link type of the 3D video. When switching between 2D video and 3D video is performed using the link information, information of the link destination location includes, for example, the network ID, the transport stream ID, the service ID and the event ID of the 3D channel.

On the other hand, on the 3D channel, location information of the 2D channel that is the return destination (hereinafter referred to as the return destination 2D channel) is transmitted. The location information of the return destination 2D channel to be transmitted includes, for example, the network ID, the transport stream ID and the service ID of the return destination 2D channel.

By transmitting such information from the broadcast station or the content distribution service provider, the terminal that receives the stream can perform switching between 2D video and 3D video automatically or in accordance with a user operation. Hereinafter, content of the information and operations performed on the terminal will be described using specific examples.

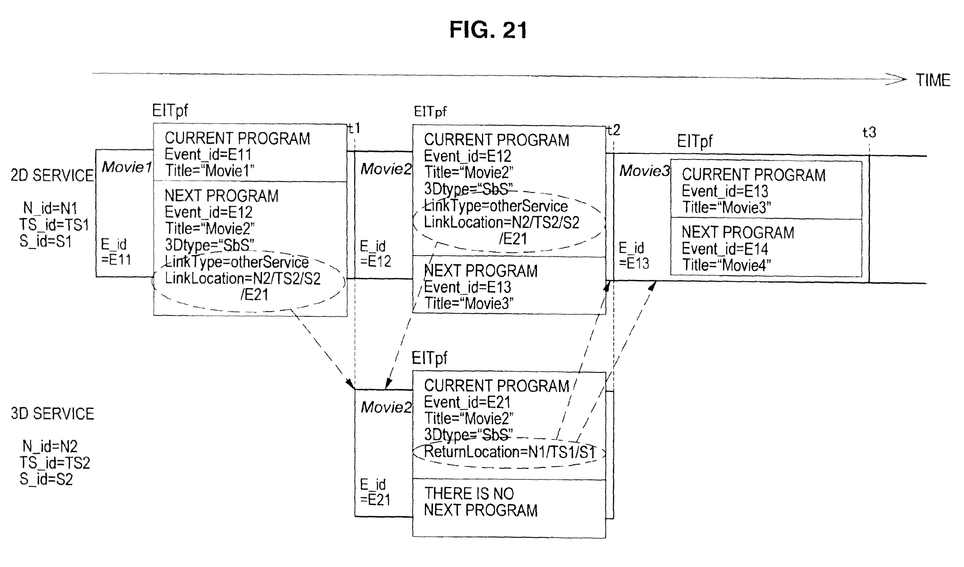

FIG. 21 is an explanatory diagram showing a case in which 2D video and 3D video are simultaneously broadcast in one program. "2D service" shown in FIG. 21 indicates a 2D channel that broadcasts 2D video, and "3D service" indicates a 3D channel that broadcasts 3D video. Until a time t1 shown in FIG 21, a program is broadcast only on the 2D channel. From the time t1 to a time 2, the same program is broadcast on both the 2D channel and the 3D channel. After the time t2, the program is broadcast only on the 2D channel again.

Note that in the example shown in FIG. 21, a network ID (N_id) of the 2D channel is denoted by N1, a transport stream ID (TS_id) of the 2D channel is denoted by TS1, and a service ID (S_id) of the 2D channel is denoted by S1. Further, a network ID (N_id) of the 3D channel is denoted by N2, a transport stream ID (TS_id) of the 3D channel is denoted by TS2, and a service ID (S_id) of the 3D channel is denoted by S2.

When the program whose event ID (E_id) is E11 is broadcast on the 2D channel, information of the current program and the next program is described in EITpf of the 2D channel, and is transmitted as shown in FIG. 21. More specifically, in the information of the current program, E11 is described as the event ID, and "Movie1" is described as the program title (Title).

Further, in the information of the next program, E12 is described as the event ID, and "Movie2" is described as the program title. Then, "SbS" is described as the 3D system (3Dtype). This indicates that the next program provides 3D video, and the 3D video system is the side by side system. Further, information indicating that the 3D video is transmitted on another channel is described as "LinkType" and "LinkLocation". In the example shown in FIG. 21, "otherService" indicating that 3D video is transmitted on another channel (other service) is described as "LinkType", and "N2/TS2/S2/E21" indicating that the program whose 3D channel event ID is E21 corresponds to the 3D video is described as "LinkLocation. As a matter of course, information such as content, genre etc. of the program may be described in addition to the above-described information.

At the time t1, the 3D channel also starts broadcast, and simultaneous broadcast is performed by the 2D channel and the 3D channel. If the terminal that receives the broadcast is set such that 3D video is automatically displayed, when the time t1 is reached, the terminal automatically selects the 3D channel and displays 3D video that is broadcast by the 3D channel. In this case, link information is transmitted in advance by EITpf of the 2D channel. Therefore, the terminal can perform channel selection and a 3D video display process based on the link information.

When the time t1 is reached and the program that is broadcast by the 2D channel changes, the information that is described in EITpf of the 2D channel changes. More specifically, the information described in EITpf as information of the next program until the time t1 is then described as information of the current program after the time t1. After the time t1, the information described in EITpf of the 2D channel (more specifically, the information indicating that the event ID is E13 and the title of the program is "Movie3") is transmitted as the information of the next program.

In the example shown in FIG. 21, it is assumed that there is no program that will be broadcast by the 3D channel following the current program. Therefore, after the time t1, the information of the current program is described in EITpf of the 3D channel, but the information of the next program is not described. The information of the current program is described as shown in FIG. 21. More specifically, E21 is described as the event ID, "Movie2" is described as the program title, and "SbS" is described as the 3D system (3Dtype).

Further, return destination information is described in EITpf of the 3D channel. The return destination information is used to return to the channel that broadcasts the same program as 2D video, after the program ends or in response to a user operation on the terminal. FIG. 21 shows that "N1/TS1/S1" indicating that the return destination is the 2D channel is described as "ReturnLocation". Based on the link information, the terminal can return to the original 2D channel after the program that broadcasts 3D video ends, or in response to a user operation on the terminal.

When the time t2 is reached and the program that is broadcast by the 2D channel changes, the information that is described in EITpf of the 2D channel also changes. In this manner, the information is described in EITpf in accordance with program changes and transmitted. As a result, it is possible to receive broadcast by switching to an appropriate channel on the receiving side.

Note that, when the 2D channel switches to the 3D channel of the link destination, the network ID, transport stream ID and the service ID of the original 2D channel may be stored on the receiving side. Then, when returning to the original 2D channel from the link destination 3D channel, a determination process may be performed. More specifically, it may be determined whether the network ID, the transport stream ID and the service ID that are stored correspond respectively to the network ID, the transport stream ID and the service ID that are described in EITpf.

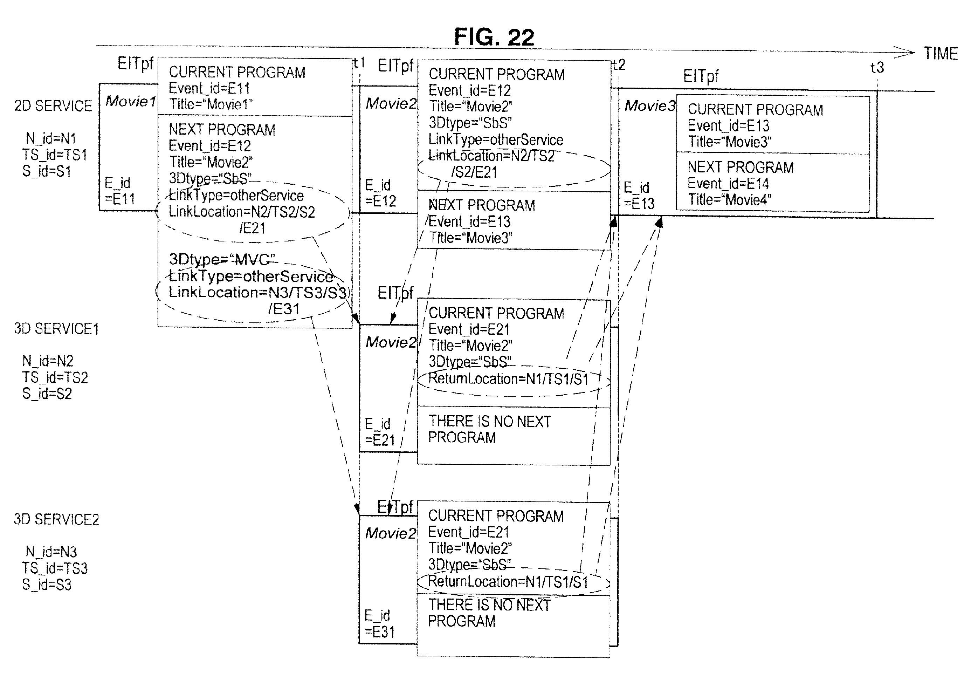

The information may be described in EITpf such that a plurality of 3D streams are linked. For example, even with the program by the same 3D video, when a certain 3D channel transmits the 3D video by the SBS system and another 3D channel transmits 3D video by MVC, information about both the 3D channels is described in EITpf as the link destination and transmitted. FIG. 22 is an explanatory diagram showing a case in which the information is described in EITpf such that a plurality of 3D streams are linked. "2D service" shown in FIG. 22 indicates a 2D channel that broadcasts 2D video, and "3D service 1" and "3D service 2" shown in FIG. 22 indicate 3D channels that broadcast 3D video. Note that, in the example shown in FIG. 22, the network ID (N_id) of the 2D channel is denoted as N1, the transport stream ID (TS_id) of the 2D channel is denoted as TS1, and the service ID (S_id) of the 2D channel is denoted as S1. Further, the network ID (N_id) of the 3D channel 1 is denoted as N2, the transport stream ID (TS_id) of the 3D channel 1 is denoted as TS2, and the service ID (S_id) of the 3D channel 1 is denoted as S2. Further, the network ID (N_id) of the 3D channel 2 is denoted as N3, the transport stream ID (TS_id) of the 3D channel 2 is denoted as TS3, and the service ID (S_id) of the 3D channel 2 is denoted as S3. The broadcast station or the content distribution service provider can write the information in EITpf in this manner and can transmit the information. On the receiver side, it is possible to receive broadcast by switching to an appropriate channel depending on its performance (the display system that can be used).

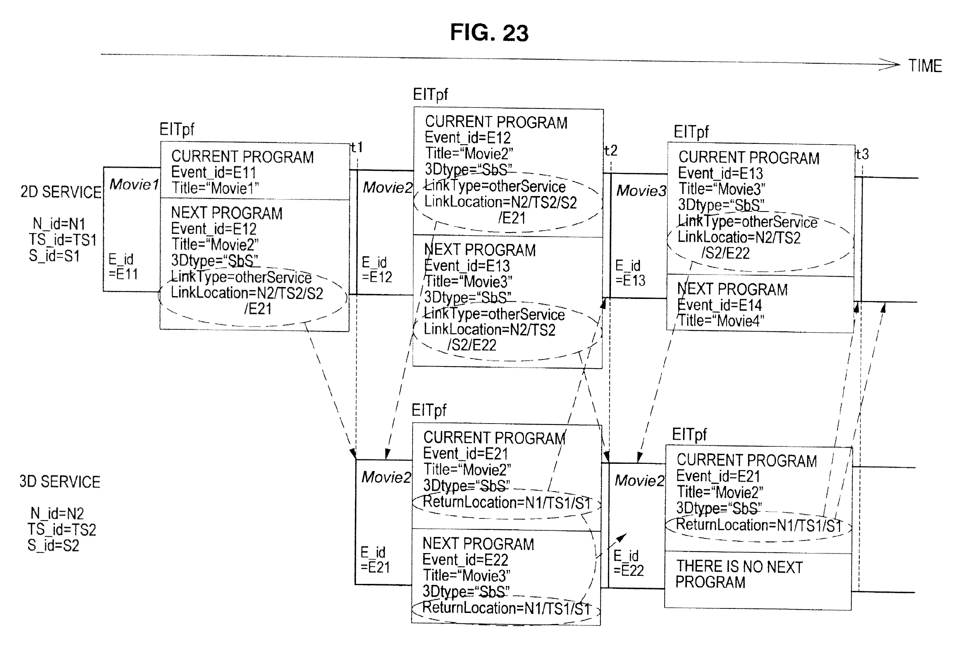

FIG. 21 and FIG. 22 show a case in which only one program is simultaneously broadcast by the 2D channel and the 3D channel. However, it is also conceivable that sequential programs are simultaneously broadcast by the 2D channel and the 3D channel. FIG. 23 is an explanatory diagram showing a case in which sequential programs are simultaneously broadcast by a 2D channel and a 3D channel. In FIG. 23, 2D service" indicates the 2D channel that broadcasts 2D video, and "3D service" indicates the 3D channel that broadcasts 3D video. In the example shown in FIG. 23, the network ID (N_id) of the 2D channel is denoted as N1, the transport stream ID (TS_id) of the 2D channel is denoted as TS1, and the service ID (S_id) of the 2D channel is denoted as S1. Further, the network ID (N_id) of the 3D channel is denoted as N2, the transport stream ID (TS_id) of the 3D channel is denoted as TS2, and the service ID (S_id) of the 3D channel is denoted as S2.

In the example shown in FIG. 23, following the program that is broadcast between the time t1 and the time t2, the program that is broadcast between the time t2 and the time t3 is also broadcast simultaneously by the 2D channel and the 3D channel. In this type of case, the broadcast station or the content distribution service provider can describe, in EITpf, information such as that shown in FIG. 23 and transmit the information.

In the example shown in FIG. 23, when the time t2 is reached and the program switches, if the receiving side is receiving the 3D channel, the receiving side may continue the reception of the 3D channel without returning to the return destination 2D channel. At this time, the receiving side may perform a determination process. More specifically, it may be determined whether the return destination of the current program and the return destination of the next program described in EITpf of the 3D channel, and further, the information of the 2D channel stored at the time of switching to the 3D channel correspond to each other.

In the example shown in FIG. 23, when the receiving side receives the program whose event ID is E21, the return destination of the current program and the return destination of the next program described in EITp, and further, the information of the 2D channel stored at the time of the switching correspond to each other. Therefore, when the time t2 is reached and the program switches, the receiving side can continue the reception of the 3D channel.

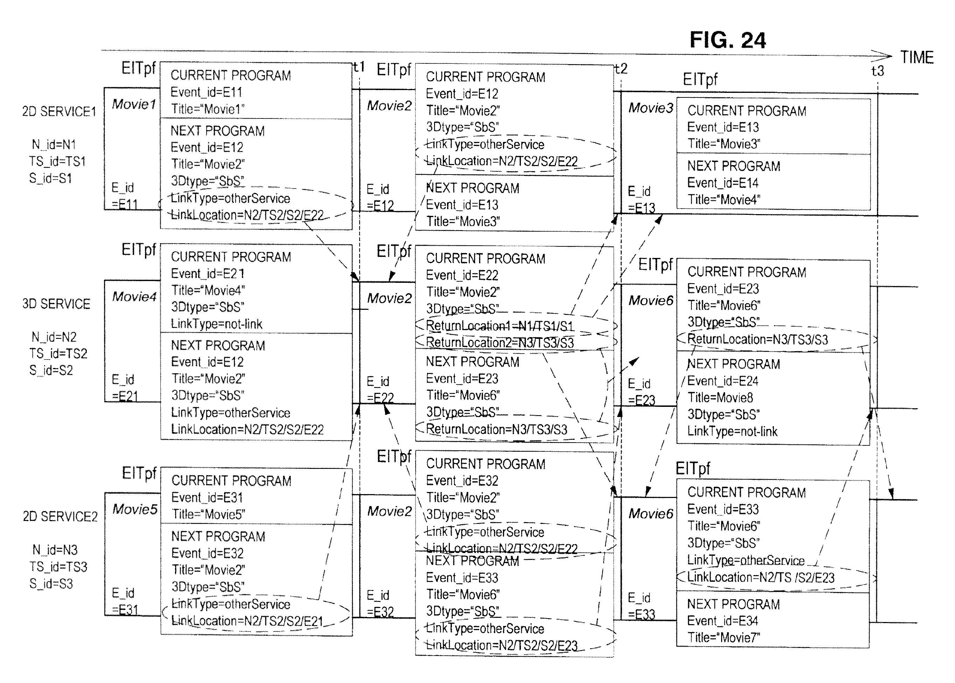

One 3D channel may be simultaneously linked by a plurality of 2D channels. FIG. 24 is an explanatory diagram showing a case in which the program that is broadcast by the 3D channel is simultaneously linked by a plurality of 2D channels. "2D service 1" and "2D service 2" shown in FIG. 24 indicate the 2D channels that broadcast 2D video, and they are referred to as the 2D channel 1 and the 2D channel 2, respectively, in the description below. Further, "3D service" shown in FIG. 24 indicates the 3D channel that broadcasts 3D video. In the example shown in FIG. 24, the network ID (N_id) of the 2D channel 1 is denoted as N1, the transport stream ID (TS_id) of the 2D channel 1 is denoted as TS1, and the service ID (S_id) of the 2D channel 1 is denoted as S1. Further, the network ID (N_id) of the 3D channel is denoted as N2, the transport stream ID (TS_id) of the 3D channel is denoted as TS2, and the service ID (S_id) of the 3D channel is denoted as S2. Further, the network ID (N_id) of the 2D channel 2 is denoted as N3, the transport stream ID (TS_id) of the 2D channel 2 is denoted as TS3, and the service ID (S_id) of the 2D channel 2 is denoted as S3.

In the example shown in FIG. 24, until the time t1, an individual broadcast is performed on all of the 2D channel 1, the 2D channel 2 and the 3D channel. Then, from the time t1 to the time t2, a simultaneous broadcast with the 3D channel is performed on both the 2D channel 1 and the 2D channel 2. When the simultaneous broadcast is performed, the broadcast station or the content distribution service provider describes, in EITpf of the 3D channel, information that specifies both the channels as the return destination, and transmits the information.

From the time t2 to the time t3, a simultaneous broadcast is performed by the 2D channel 2 and the 3D channel. Therefore, if the time t2 is reached when the channel is switched from the 2D channel 1 to the 3D channel, the receiving side can perform control such that the channel will be switched from the 3D channel to the 2D channel 1. On the other hand, if the time t2 is reached when the channel is switched from the 2D channel 2 to the 3D channel, the receiving side can perform control such that the selected 3D channel is continued to be used as it is.

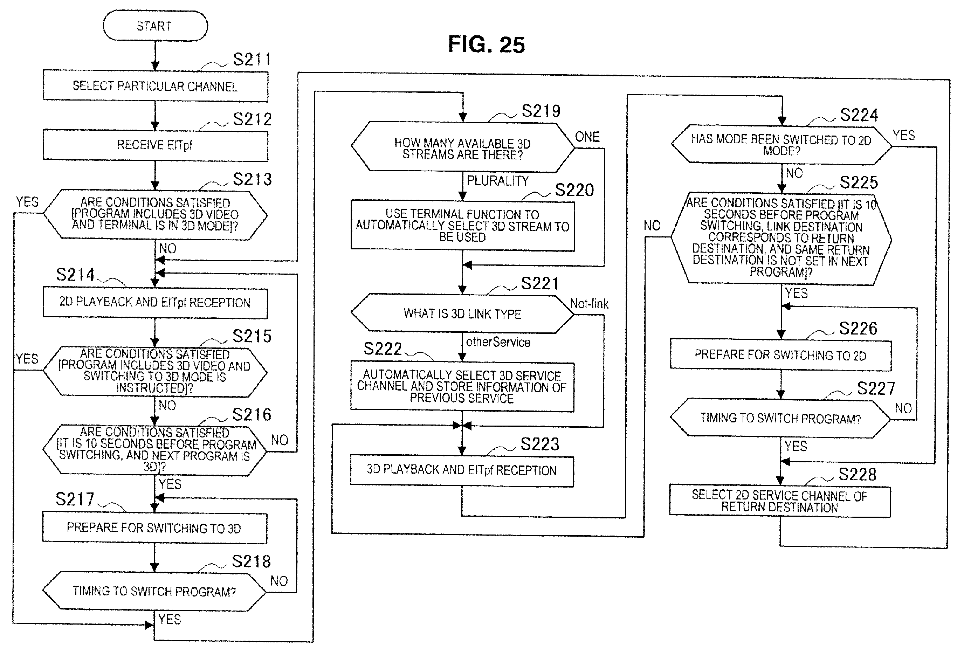

FIG. 25 is a flowchart showing an example of channel selection and playback operation on the terminal on the receiving side according to the present embodiment, when the above-described link information is transmitted from the broadcast station or the content distribution service provider. Hereinafter an example of the channel selection and the playback operation on the terminal on the receiving side according to the present embodiment will be described with reference to FIG. 25.

First, a particular channel is selected by the terminal on the receiving side (step S211). In this state, the terminal receives EITpf transmitted on the selected channel (step S212), and it is determined whether the current program is a program that includes 3D video and the terminal is in a mode that displays 3D video (a 3D mode) (step S213). When it is determined at step S213 that the program includes 3D video and the terminal is in the 3D mode, the process proceeds to step S219 to be described later. On the other hand, when the program does not include 3D video, or the terminal is not in the 3D mode, the terminal plays bark 2D video and continues the reception of EITpf (step S214).

While the terminal plays back the 2D video and continues the reception of EITpf at steep S214 described above, the terminal determines whether the current program is a program that includes 3D video and also whether an instruction to switch to the 3D mode is issued from the user to the terminal (step S215). When the instruction is issued, the process proceeds to step S219.

If the instruction to switch to the 3D mode is not issued to the terminal in the state where the terminal plays back the 2D video and continues the reception of EITpf, then, the terminal determines whether it is a time point that is a predetermined time period (for example, 10 seconds) before the switching of the program and also whether the next program is a program that includes 3D video (step S216).

When it is determined at step S216 that the time point that is the predetermined time period before the switching of the program has not been reached, or that the next program does not include 3D video even if the time point has been reached, the process returns to step S214 and the terminal plays back 2D video and continues the reception of EITpf. On the other hand, when the time point that is the predetermined time period before the switching of the program has been reached and the next program includes 3D video, the terminal performs a preparation process to switch to the 3D program (step S217). The preparation process to switch to the 3D program may be, for example, an activation (energization) process of a circuit to play back 3D video.

When the preparation process to switch to the 3D program is completed at step S217 described above, the terminal determines whether or not a program switching timing has been reached (step S218). When the program switching timing has not been reached, the process returns to step S217 described above and the terminal continues the preparation process to switch to the 3D program. On the other hand, when the program switching timing has been reached, then, the terminal determines, based on the information described in EITpf, how many 3D streams are available (step S219).

When it is determined at step S219 described above that only one 3D stream is available, the process of the terminal advances to step S221 to be described later. On the other hand, when two or more 3D streams are available, a terminal function is used to select a 3D stream to be used from among the available two or more 3D streams (stop S220).

Next, the terminal receives a link type of the 3D stream after the switching of the program, from EITpf that has been received before the switching of the program (step S221). When the link type of the 3D stream is no link (Not Link), the process of the terminal advances to step S223 to be described later. On the other hand, when the link type of the 3D stream is another service (otherService), the terminal automatically selects the service (channel) of the link destination, and the terminal stores the network ID, the transport stream ID and the service ID of the original channel (step S222).

Next, while the terminal receives the 3D stream and plays back the 3D video, the terminal receives EITpf that is transmitted on that channel (step S223). Then, it is determined whether or not the mode of the terminal has been switched to a mode that plays back 2D video (a 2D mode) by a user operation (step S224). As a result of the determination at step S224, when the mode of the terminal has been switched to the 2D mode, the process of the terminal advances to step S228 to be described later. On the other hand, when the mode of the terminal has not been switched to the 2D mode, then, the terminal determines, using EITpf received at step S223 described above, whether a time point that is a predetermined time period (for example, 10 seconds) before the switching of the program has been reached, whether the link source corresponds to the return destination, and whether the same return destination is not set in the next program (step S225).

When it is determined at step S225 described above that the above conditions are not satisfied, the process returns to step S223 and the terminal continues the playback of the 3D video and the reception of EITpf transmitted on that channel. On the other hand, when it is determined at step S225 that the above conditions are satisfied, the terminal performs a preparation process to switch to the 2D program (step S226). The preparation process to switch to the 2D program may be, for example, an activation (energization) process of a circuit to play back 2D video.

When the preparation process to switch to the 2D program is completed at step S226 described above, the terminal determines whether or not the program switching timing has been reached (step S227). When the program switching timing has not been reached, the process returns to step S226 described above and the terminal continues the preparation process to switch to the 2D program. On the other hand, when the program switching timing has been reached, the terminal automatically selects the return destination 2D channel in accordance with the information that is described in EITpf and transmitted on the channel that broadcasts the 3D program (step S228). Then, the process returns to step S214 described above, and the terminal plays back the 2D video and performs the reception of EITpf.

By performing a series of processes shown in FIG. 25 in this manner, the terminal can switch between the 2D channel and the 3D channel automatically or in accordance with a user operation, and can perform the reception. The example of the channel selection and the playback operation on the terminal on the receiving side according to the present embodiment is described above with reference to FIG. 25.

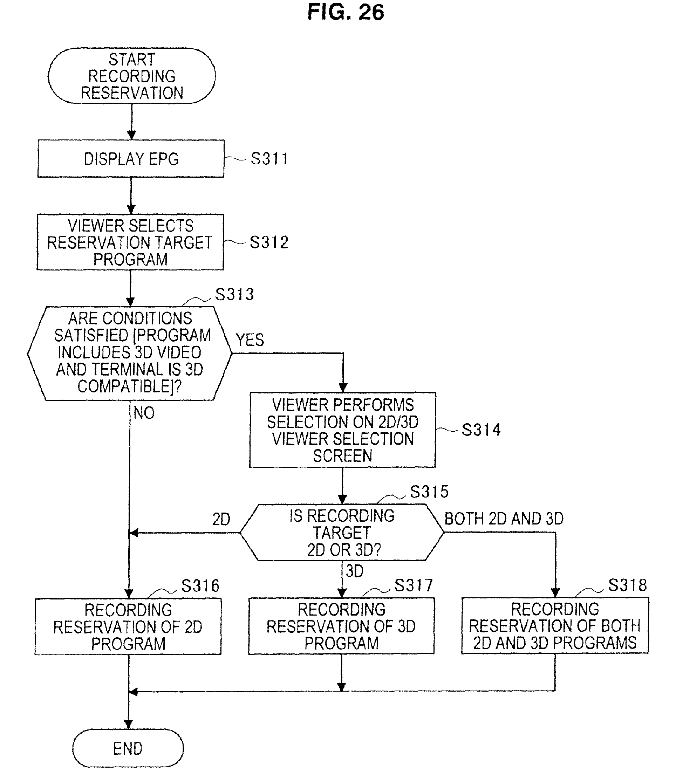

Next, an example of a recording reservation operation on the terminal on the receiving side according to the present embodiment will be described. FIG. 26 is a flowchart showing an example of the recording reservation operation on the terminal on the receiving side according to the present embodiment.

When a recording reservation process is started by a user operation on the terminal, the terminal displays on the screen an electronic program guide (EPG) using EITschedule transmitted from the broadcast station or the like (step S311). When the user selects one program whose recording is to be reserved, from the electronic program guide displayed on the screen (step S312), the terminal receives information described in EITschedule, and determines whether the selected program is a program that includes 3D video and the terminal itself is capable of playing back 3D video (step S313).

In other words, the terminal determines whether or not the selected program is the program that includes 3D video, based on whether or not the 3D video transmission system and the link destination information is described in EITschedule of the selected program.

As a result of the determination at step S313 described above, when the selected program is not the program that includes 3D video, or when the terminal itself is not capable of playing back 3D video even if the selected program is the program that includes 3D video, the terminal performs recording reservation of the specified 2D program (step S316). On the other hand, as a result of the determination at step S313 described above, when the selected program is the program that includes 3D video and the terminal itself is capable of playing back 3D video, the terminal displays on its screen a screen that allows the user to select which of the 2D program and the 3D program is to be used for recording. The user performs an operation, on the screen displayed on the terminal, and thereby determines whether to perform recording reservation of the 2D program, whether to perform recording reservation of the 3D program, or whether to perform recording reservation of both the 2D program and the 3D program (step S314).

The terminal determines, at step S314 described above, for which program the user has performed the recording reservation (step S315). When it is determined at step S315 that the user has selected the recording of the 2D program, the terminal performs the recording reservation of the specified 2D program (step S316). Further, when it is determined at step S315 that the user has selected the recording of the 3D program, the terminal performs the recording reservation of the specified 3D program (step S317). Furthermore, when it is determined at step S315 that the user has selected the recording of both the 2D program and the 3D program, the terminal performs the recording reservation of both the specified 2D program and 3D program (step S318).

By performing such a process, the terminal can perform the recording reservation of the 2D program and/or the 3D program. The example of the recording reservation operation on the terminal on the receiving side according to the present embodiment is described above.

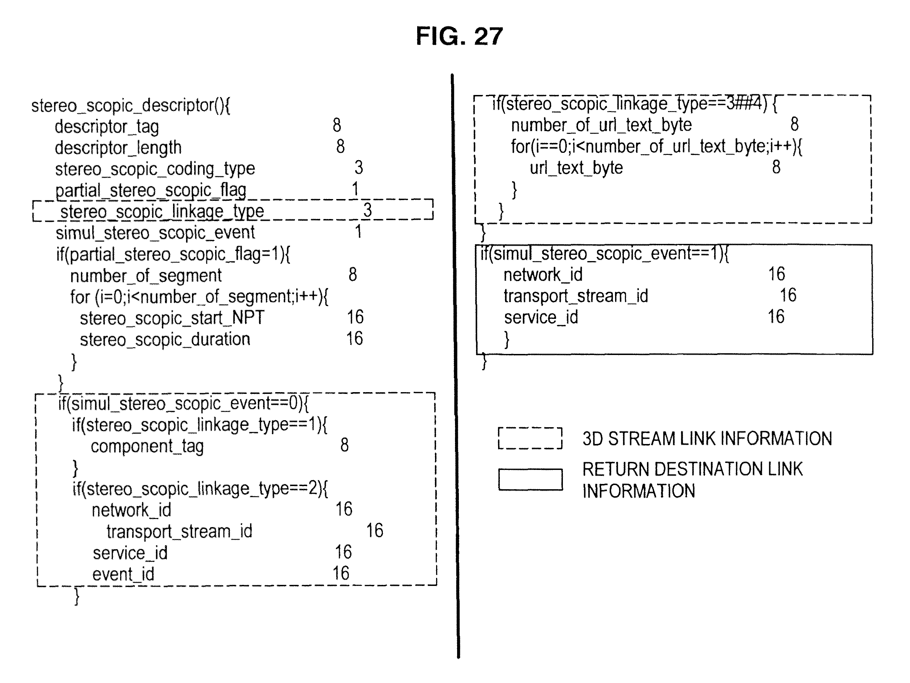

Next, an example of a structure of a descriptor is shown. The descriptor is transmitted using EITschedule and EITpf when the link information is used to switch between the 2D program and the 3D program. FIG. 27 is an explanatory diagram showing an example of the structure of the descriptor that is transmitted using EITschedule and EITpf. Note that the numerals shown in FIG. 27 indicate the number of bits of each area. Note also that the descriptor shown in FIG. 27 is a modified example of the 3D segment descriptor explained with reference to FIG. 6. Therefore, a structure may be adopted in which the return destination information, for example, is added to the 3D segment descriptor. However, in FIG. 27, for explanatory convenience, a separate structure is used as an example.

"descriptor_tag" is a tag for identifying this "stereo_scopic_descriptor". "descriptor_length" is an area that stores the length of this "stereo_scopic_descriptor".

"stereo_scopic_coding_type" is an area that stores information about the 3D video system, and corresponds to the above-described "3Dtype" shown in FIG. 21 etc. "partial_stereo_scopic_flag" is an area that stores a flag for identifying whether a part of the program provides 3D video. If the value of "partial_stereo_scopic flag" is 1, it indicates that a part of the program provides 3D video.

"stereo_scopic_linkage_type" is an area that stores information about a link system of the 2D program and the 3D program, and corresponds to the above-described "Linktype" shown in FIG. 21 etc. When the link information is used to switch between the 2D program and the 3D program, information indicating that another service (another channel) is used to transmit the 3D program is stored in "stereo_scopic_linkage_type".

"simul_stereo_scopic_event" is an area that stores a flag used when the 2D program and the 3D program are simultaneously broadcast.

The subsequent if sentence is described to determine whether or not the value of "partial_stereo_scopic_flag" is 1. When the value of "partial_stereo_scopic_flag" is 1, namely, when a part of the program provides 3D video, information about the section of the 3D video part is described from the next line. "stereo_scopic_start_NPT" is an area that stores segment start NPT. "stereo_scopic_duration" is an area that stores information about the length of time of the 3D video.

The subsequent if sentence is described to determine whether or not the value of "simul_stereo_scopic_event" is 0. When the value of "simul_stereo_scopic_event" is 0, the link information from the 2D video to the 3D video is described. When the value of "simul_stereo_scopic_event" is 1, the link information from the 3D video to the 2D video is described.

First, a case will be described in which the value of "simul_stereo_scopic_event" is 0. When the value of "simul_stereo_scopic_event" is 0, information to be described differs depending on the value of "sterea_seopic_linkage_type". When the value of "stereo_scopic_linkage_type" is 1 (in a case where 3D video is transmitted using a separate ES in the same channel), a component tag of the 3D video is described. When the value of "stereo_scopic_linkage_type" is 2 (in a case where 3D video is transmitted on another channel), the ne twork ID, the transport stream ID, the service ID and the event ID used to transmit the 3D video are described. When the value of "stereo_scopic_linkage_type" is 3 or 4 (in a case of streaming of 3D video from the server, or in a case where a 3D video stream is downloaded in advance from the server), information about the server address is described.

Next a case will be described in which the value of "simul_stereo_scopic_event" is 1. When the value of "simul_stereo_scopic_event" is 1, the network ID, the transport stream ID and the service ID of the 2D channel of the link source are described.

By transmitting information such as that shown in FIG. 27 using EITschedule and EITpf, the broadcast station or the like can allow the terminal on the receiver side to automatically switch between the 2D channel and the 3D channel, or can allow the terminal to select an appropriate channel in accordance with a user operation on the terminal.

Next, an example of a configuration of a server of the broadcast station or the content provider will be described. The server transmits a signal using a content transmission method according to the embodiment of the present invention.

### 8. Configuration of server

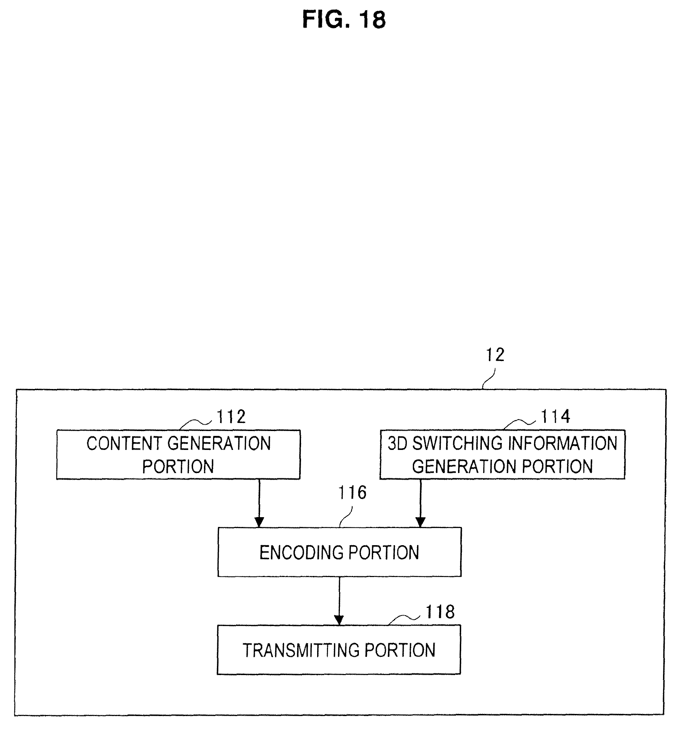

FIG. 18 is an explanatory diagram showing an example of a configuration of the server 12 of the broadcast station or the content provider according to the embodiment of the present invention. The server 12 is an example of a signal transmitting device of the present invention. Hereinafter, an example of the configuration of the server 12 of the broadcast station or the content provider according to the embodiment of the present invention will be described with reference to FIG. 18.

As shown in FIG. 18, the server 12 includes a content generation portion 112, a 3D switching information generation portion 114, an encoding portion 116 and a transmitting portion 118.

The content generation portion 112 generates data of video content including 2D video or 3D video. The data of the video content generated by the content generation portion 112 can be displayed on the terminal 20 as 2D video or 3D video. The data of the video content generated by the content generation portion 112 is transmitted to the encoding portion 116.

The 3D switching information generation portion 114 generates 3D switching information for automatically switching between 2D video and 3D video on the terminal 20. The 3D switching information generated by the 3D switching information generation portion 114 includes various types of information explained in "4. Information necessary for 2D/3D switching" described above. The 3D switching information generated by the 3D switching information generation portion 114 is transmitted to the encoding portion 116.

The encoding portion 116 encodes, using a predetermined encoding system, the data of the video content generated by the content generation portion 112 and the 3D switching information generated by the 3D switching information generation portion 114. The data encoded by the encoding portion 116 is to the transmitting portion 118.

The transmitting portion 118 transmits the data encoded by the encoding portion 116. The data encoded by the encoding portion 116 may be transmitted from the antenna 11, or may be transmitted via the network 15.

The example of the configuration of the server 12 of the broadcast station or the content provider according to the embodiment of the present invention is described above with reference to FIG. 18. Next, an example of a configuration of the terminal 20 according to the embodiment of the present invention will be described.

### 9. Configuration of terminal

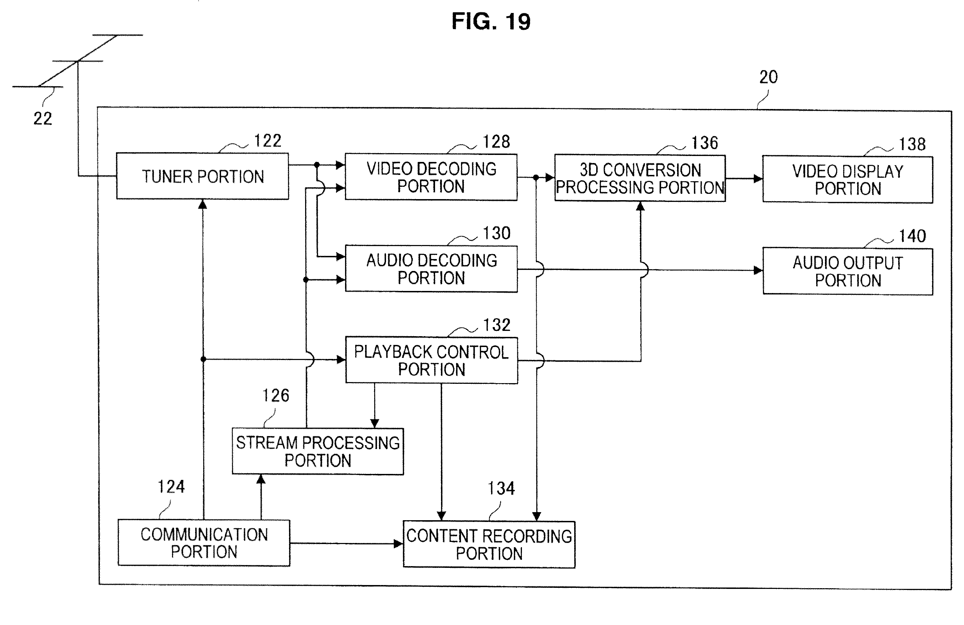

FIG. 19 is an explanatory diagram showing an example of the configuration of the terminal 20 according to the embodiment of the present invention. Hereinafter, the example of the configuration of the terminal 20 according to the embodiment of the present invention will be described with reference to FIG. 19.

As shown in FIG. 19, the terminal 20 according to the embodiment of the present invention includes a tuner portion 122, a communication portion 124, a stream processing portion 126, a video decoding portion 128, an audio decoding portion 130, a playback control portion 132, a content recording portion 134, a 3D conversion processing portion 136, a video display portion 138, and an audio output portion 140.

The tuner portion 122 receives digital broadcast signals, which have been received by the antenna 22, and extracts, from the digital broadcast signals, a broadcast signal in a predetermined band corresponding to a predetermined program. The tuner portion 122 performs a predetermined process, such as demodulation, on the broadcast signal in the predetermined band extracted from the digital broadcast signals. Then, the tuner portion 122 separates a packet of the predetermined program from the stream obtained by performing the above-described predetermined process, and supplies the packet to the video decoding portion 128 and the audio decoding portion 130.

The communication portion 124 receives signals transmitted via the network 15, or transmits signals to the network 15. When the communication portion 124 receives the stream of the program (content) transmitted from the server 12 via the network 15, the terminal 20 supplies the received stream to the stream processing portion 126.

The processing portion 126 performs a predetermined process, such as demodulation, on the stream that is transmitted from the server 12 via the network 15 and received by the communication portion 124. The stream processing portion 126 separates a packet of a predetermined program from the stream obtained by performing the above-described predetermined process, and supplies the packet to the video decoding portion 128 and the audio decoding portion 130.

The video decoding portion 128 decodes the packet of the program or the content supplied from the tuner portion 122 or the stream processing portion 126, and outputs a video signal. The audio decoding portion 130 decodes the packet of the program or the content supplied from the tuner portion 122 or the stream processing portion 126, and outputs an audio signal.

The playback control portion 132 controls playback of the program or the content. Examples of playback control of the program or the content include switching control of the stream to be received, which is based on switching information of the 2D video and the 3D video generated by the broadcast station or the content provider. The playback control portion 132 analyses the above-described information from the broadcast station or the content provider. Then, based on the analysis, the playback control portion 132 performs control of the tuner portion 122 and the stream processing portion 126 so that playback of the stream can be performed appropriately.

The content recording portion 134 records the stream received by the communication portion 124. When the playback control portion 132 performs stream switching control, the stream recorded in the content recording portion 134 is read out from the content recording portion 134, if necessary. Then, the stream processing portion 126 performs the predetermined process, such as demodulation, on the stream.

The 3D conversion processing portion 136 performs a switching process from 2D video to 3D video or a switching process from 3D video to 2D video, as necessary, on the video signal decoded by the video decoding portion 128.

The example of the configuration of the terminal 20 according to the embodiment of the present invention is described above with reference to FIG. 19. Since the terminal 20 has the configuration described above, the terminal 20 can perform display by switching between 2D video and 3D video based on the information transmitted from the broadcast station or the content provider. Further, the user who sees the video displayed on the terminal 20 can select continuation of viewing the 2D video even when the 3D video section arrives, by operating the terminal 20 using a remote control or the like. As a matter of course, in the present invention, it is apparent that the configuration of the terminal that performs display by switching between 2D video and 3D video based on the information transmitted from the broadcast station or the content provider is not limited to this example.

### 10. Conclusion

According to the embodiment of the present invention described above, information to switch between 2D and 3D video is generated such that it corresponds to various types of video transmission systems and 3D transmission systems, and is transmitted from the broadcast station or the content provider. The terminal that displays video can perform display by switching between 2D video and 3D video automatically based on the generated information (or based on an instruction from the user).

Accordingly, if a terminal that is capable of displaying 3D video is designed to interpret the above-described information, the terminal can perform display by switching between 2D video and 3D video automatically (or in accordance with an instruction from the user). On the other hand, a terminal that is not capable of displaying 3D video can continue to display 2D video even in the 3D video section, by neglecting the above-described information even if the terminal receives it. When the 3D stream in the 3D video section is transmitted separately from the 2D stream, the terminal can continue to display 2D video without any deterioration in image quality, by continuously receiving the 2D stream even in the 3D video section.

Note that the series of processes described above can be performed by either hardware or software. When the series of processes are performed by software, a program forming the software is installed from a program recording medium into a computer built into dedicated hardware or, for example, a multi-purpose personal computer that is capable of executing various types of functions by installing various programs.

The communication may be wireless communication or wired communication, or a combination of wireless communication and wired communication. More specifically, wireless communication may be performed in a certain section, and wired communication may be performed in another section. Further, communication from a certain device to another device may be performed by wired communication, and communication from the other device to the certain device may be performed by wireless communication.

It should be understood by those skilled in the art that various modifications, combinations, sub-combinations and alterations may occur depending on design requirements and other factors insofar as they are within the scope of the appended claims or the equivalents thereof.
The present application contains subject matter related to that disclosed in Japanese Priority Patent Application JP 2009-192400 filed in the Japan Patent Office on August 21, 2009 and Japanese Priority Patent Application JP 2010-56209 filed in the Japan Patent Office on March 12, 2010.

## Claims

1. A video content transmission method, comprising the steps of:
transmitting normal video content to at least one stream respectively transmitted on at least one broadcast channel;
transmitting stereoscopic video content that corresponds to the normal video content to at least one stream respectively transmitted on at least one broadcast channel;
transmitting, along with the broadcast channel, system information relating to a transmission system of the stereoscopic video content; and
transmitting, along with the broadcast channel, source location information relating to a source location of the stereoscopic video content.

2. The video content transmission method according to claim 1,
wherein the number of the at least one broadcast channel is one, and the number of the at least one stream of the broadcast channel is one.

3. The video content transmission method according to claim 1,
wherein the number of the at least one broadcast channel is one, and the number of the at least one stream of the broadcast channel is at least two.

4. The video content transmission method according to claim 1,
wherein the number of the at least one broadcast channel is at least two, and the number of the at least one stream of each of the broadcast channels is at least two;
wherein the normal video content is transmitted using a first stream of a first broadcast channel in the normal video transmitting step;
wherein the stereoscopic video content is transmitted using a first stream of a second broadcast channel in the stereoscopic video transmitting step;
wherein the system information is transmitted along with the first broadcast channel in the system information transmitting step; and
wherein the source location information is transmitted along with the first broadcast channel in the source location information transmitting step.

5. The video content transmission method according to claim 4, further comprising the step of:
transmitting, when the stereoscopic video content is transmitted in the stereoscopic video transmitting step, return destination information to the first stream through which normal video content corresponding to the stereoscopic video content is transmitted.

6. A video content transmission method, comprising the steps of:
transmitting normal video content to at least one stream respectively transmitted on at least one broadcast channel;
transmitting stereoscopic video content that corresponds to the normal video content, by streaming from a server;
transmitting, along with the broadcast channel, system information relating to a transmission system of the stereoscopic video content; and
transmitting, along with the broadcast channel, source location information relating to a source location of the stereoscopic video content.

7. A video content transmission method, comprising the steps of:
transmitting normal video content to at least one stream respectively transmitted on at least one broadcast channel;
transmitting, in advance from a server, stereoscopic video content that corresponds to the normal video content, before a period in which the stereoscopic video content is displayed;
transmitting, along with the broadcast channel, system information relating to a transmission system of the stereoscopic video content; and
transmitting, along with the broadcast channel, source location information relating to a source location of the stereoscopic video content.

8. The video content transmission method according to any one of claims 2, 3, 6 and 7,
wherein the system information transmitted in the system information transmitting step is described in an event information table (EIT).

9. The video content transmission method according to claim 8,
wherein the normal video content forms a predetermined program, and
wherein, when the stereoscopic video content is present only in some section of the predetermined program, time information of the stereoscopic video content in the program is described in the EIT.

10. The video content transmission method according to claim 8,
wherein the normal video content forms a predetermined program, and
wherein the system information that relates to a current program and that is transmitted in the system information transmitting step, and the system information that relates to a next program and that is transmitted in the system information transmitting step are described in the EIT

11. The video content transmission method according to any one of claims 2, 3, 4, 6 and 7,
wherein the system information transmitted in the system information transmitting step is described in an adaptation field of a transport stream (TS).

12. The video content transmission method according to any one of claims 2, 3, 4, 6 and 7,
wherein the system information transmitted in the system information transmitting step is described in a header area of a video elementary stream (ES).

13. The video content transmission method according to any one of claims 1, 6, and 7, further comprising the step of:
transmitting transmission mode identification information in which information that identifies a transmission mode of the stereoscopic video content is described.

14. A display device comprising:
a display portion that displays one of normal video content and stereoscopic video content;
a receiving portion which receives at least one stream in at least one broadcast channel that includes one of the normal video content and the stereoscopic video content, and which receives system information relating to a transmission system of the stereoscopic video content and source location information relating to a source location of the stereoscopic video content, the system information and the source location information being transmitted along with the broadcast channel; and
a mode switching portion that performs switching between a first mode in which the normal video content is displayed and a second mode in which the stereoscopic video content is displayed,
wherein, when the first mode is selected by the mode switching portion, the display portion receives a stream through which the normal video content is transmitted and displays the normal video content, and
wherein, when the second mode is selected by mods switching portion, based on the transmission system information and the source location information received by the receiving portion, the display portion receives a stream through which the stereoscopic video content is transmitted and displays the stereoscopic video content.

15. The display device according to claim 14, further comprising:
a storage portion that, when the stream through which the stereoscopic video content is transmitted appears, stores source location information of the stream through which the normal video content is transmitted.
